# EUROPEAN PATENT SPECIFICATION

(11) **EP 3 130 439 B1**
(45) Date of publication and mention of the grant of the patent: **07.08.2019**
(21) Application number: 15777251.8
(22) Date of filing: 13.04.2015
(51) Int. Cl.: B29C 33/02, B29C 35/02, B60C 11/00, B29D 30/06

(54) **MOLD FOR RUBBER ARTICLE, METHOD FOR PRODUCING TIRE, AND TIRE**
GUSSFORM FÜR KAUTSCHUKARTIKEL, VERFAHREN ZUR HERSTELLUNG EINES REIFENS UND REIFEN
MOULE POUR ARTICLE EN CAOUTCHOUC, PROCÉDÉ DE FABRICATION DE PNEU, ET PNEU

(30) Priority: 11.04.2014 JP 2014081696; 09.04.2015 JP 2015079755
(43) Date of publication of application: 15.02.2017
(73) Proprietor: Bridgestone Corporation, Tokyo 104-8340 (JP)
(72) Inventor: HIRAKI, Shunsuke, Tokyo 104-8340 (JP)
(74) Representative: Oxley, Robin John George
(86) International application number: PCT/JP2015/061315
(87) International publication number: WO 2015/156413

(56) References cited:
- EP-A2- 1 010 510
- EP-A2- 1 066 941
- WO-A1-2012/156439
- JP-A- H02 295 706
- JP-A- H10 138 249
- JP-A- H10 244 540
- JP-A- 2005 193 577
- JP-A- 2005 297 443
- JP-A- 2007 001 076
- JP-A- 2007 038 426
- JP-A- 2007 038 426
- JP-A- 2009 269 363
- US-A- 4 895 502

## Description

### BACKGROUND OF THE INVENTION

### 1. Field of the Invention

The present invention relates to a mold for a rubber article, a method for manufacturing a tire, and a tire and, in particular, to a mold for molding a rubber article capable of improving the appearance of the rubber article, or tire, after cure-molding, a method for manufacturing the tire, and the tire.

### 2. Description of the Related Art

Conventionally, a tire mold for molding a tire, which is a rubber article, has a plurality of air vent holes for discharging air, or gas, arising from rubber composition trapped between the tire surface being cured (vulcanized) and the molding surface of the mold. The air, or gas, arising from rubber composition, if it is allowed to remain between the molding surface of the tire mold and the surface of the uncured (green) tire at the time of cure-molding, may cause marks and dents on the tire surface and air trapped inside the tire. And this degrades the appearance quality and the durability of the tire. To counter this problem, air vent holes are provided in the mold to reduce the fluidity of rubber during cure-molding and to discharge air, or gas, which can leave dented marks, such as scars, on the tire surface, out to the open air. The air vent holes like these are each formed with a cylindrical member called a vent piece driven into the hole made by drilling or formed in advance during the fabrication of the mold. The air vent holes are also known to create a string-shaped spew about 7.5 mm long, for instance, or more than 30 mm long occasionally, on the cured tire surface as a result of tire rubber flowing in there during cure-molding. The spews are removed after the cure-molding process to improve the appearance of the product tire. However, this removing process hinders the raising of production efficiency in the manufacturing process of the tire. Besides, the removed spews turn into a large amount of scrappage, which would increase load on the environment. Also, the spews even after their removal are well known to leave spew marks on the tire surface with their base portions left unremoved.

Incidentally, the larger the cross-sectional area of the air vent hole penetrating from the molding surface to the back surface, the better the air (gas) discharge performance will be at the time of cure-molding. This may require the cross-sectional area of the air vent hole to be large. However, when the air vent hole has a conventionally-known round shape, too large a hole diameter to make the cross-sectional area large may result in the formation of a spew with a correspondingly large width on the tire surface. Spews are protrusions on the tire surface. And so, even when they are removed after the cure-molding process, the remaining spew marks can reduce the road-hugging performance of the tire, which is a capacity of the tire surface in contact with the road surface. As a result, there will be significant adverse effects on motion performances, such as initial anti-wear performance, anti-uneven-wear performance, grip performance, steering stability performance, and wet-road dewatering performance, of the product tire. For example, uneven wear can progress initially in parts of the tire tread or blocks due to spew marks which can initially reduce the road-hugging performance of the tire. Then the shape of uneven wear having occurred in the initial phase will keep its influence even after the erasure of the spew marks, thus further aggravating the uneven wear. Depending on the shape of uneven wear in parts of the tire tread or blocks, there may be cases of further degrading not only anti-uneven-wear performance but also motion performances, such as anti-wear performance, grip performance, steering stability performance, and wet-road dewatering performance, of the tire as a whole. Generally, the air vent holes are each made with a round cross-sectional shape of 1 to 2 mm in diameter. This is a compromise between the air discharge performance which prefers larger hole diameters and the appearance, motion performance, anti-wear performance, etc., of the product tire which prefer smaller hole diameters. The air vent holes also must achieve other performances while satisfying the above-mentioned compromise. That is, the air vent holes should be so designed as to cause little of spews on the tire surface after the cure-molding while allowing the discharge of air. Or the air vent holes cause few spews that require removal. Or the air vent holes cause spews so small in size and low in height that they necessitate no removal process.

Patent Documents 1 to 3 disclose technologies for inhibiting the formation of spews which are whisker-like protrusions on the tire surface. According to Patent Document 1, wire electric discharge machining (EDM) is employed to form slits on the molding surface extending in the circumferential or axial direction or slits on the division surface of the mold that lead from the molding surface to the back surface. In this manner, the slits are used as air vent grooves, instead of the air vent holes, to discharge air from the molding surface side to the back surface side. According to Patent Document 2, exhaust ports penetrating to the division surface of the mold are formed by drilling, and a slit penetrating from the molding surface to the exhaust port is further formed by wire EDM along the direction of extension of the exhaust port. In this manner, air is discharged via the slit and exhaust port to the outside. According to Patent Document 3, a plurality of thin-sheet blades of material having a different expansion coefficient from that of the material of the mold are inserted in such a manner as to penetrate from the molding surface to the back surface at the time of casting the mold. And gaps that occur between the blades and the mold body due to the difference in the rate of shrinkage between the blades and the mold body after cooling are used as the air vent holes. In this manner, air is discharged from the molding surface side to the back surface side.

### PRIOR ART DOCUMENT

### Patent Document

Patent Document 1: Japanese Unexamined Patent Application No. 2005-305921
Patent Document 2: Japanese Unexamined Patent Application No. 11-300746
Patent Document 3: Japanese Unexamined Patent Application No. 2007-38426

Reference is also made to JP 2007-01076, EP 1010510, JP 2005-297443 and EP 1066941.

### SUMMARY OF THE INVENTION

### Problem to be Solved by the Invention

However, the slits formed as air vent grooves in the molding surface as disclosed in Patent Document 1 do not directly penetrate from the molding surface to the back surface in their respective positions. Thus, they cannot discharge air directly from their positions to the corresponding positions on the back surface side. This results in a reduced air discharge performance because the area of the discharge opening of air having passed through the slit is small in comparison with the area of the slit opening in the molding surface.

The slits according to Patent Document 2 are formed in the molding surface in the circumferential direction. As a result, spews extending circumferentially are formed in a plurality of positions on the product tire after the cure-molding. Also, the air led into the slits is discharged outside the mold by way of exhaust ports provided on the back surface side. However, because the slits formed do not directly penetrate from the molding surface to the back surface in their respective positions, they cannot discharge air directly from their positions to the corresponding positions on the back surface side. That is, according to the arrangement as disclosed in Patent Document 2, as with that of Patent Document 1, the air discharge performance is low because the area of the discharge opening of air having passed through the slit and the exhaust port is small in comparison with the area of the slit opening on the molding surface.

According to Patent Document 3, minute apertures leading to the vent hole can be formed only on the molding surface where blades are provided. As the apertures cannot be formed arbitrarily on the molding surface, the apertures cannot be positioned where air vent holes are primarily to be formed. This will hamper efficient discharge of air.

Also, according to Patent Documents 1 and 2, a subsequent process of wire electric discharge machining or drilling is necessitated. According to Patent Document 3, a preceding process of providing a plurality of blades is necessitated prior to the casting of the mold. All these pose a problem of lengthy manufacturing process of the mold. In other words, the arrangements of these disclosures require the provision of a large number of slits or blades if they are to achieve the capacity equivalent to the flow rate of air ensured by the conventional air vent holes. And this raises a problem of lowered production efficiency in the fabrication of the mold, which takes much time and trouble in the subsequent or preceding processes.

For this reason, the object of the present invention is to provide a mold for molding a rubber article capable of ensuring the discharge of air during cure-molding of green rubber and improving the appearance of the rubber article after the cure-molding by inhibiting the occurrence of spews during the cure-molding, and further a method for manufacturing a tire using this mold for molding a rubber article, and a tire molded with this mold.

### Means for Solving the Problem

The air (gas) discharge performance of the air vent holes does not change if the total area of the air vent holes opening in the molding surface remains the same, as long as there are no changes in pressure reduction due to air suction from the back surface, viscoelasticity of the rubber, and other conditions. For example, let us consider the case with conventional round-shaped air vent holes 1 mm to 2 mm in diameter opening in the molding surface. By keeping the same total area of the air vent holes opening in the molding surface, the air discharge performance can be maintained even when the total number of the air vent holes is reduced while the diameter of the air vent holes is made larger. And it can be maintained even when the total number of the air vent holes is increased while the diameter of the air vent holes is made smaller.

Making the diameter of the air vent holes larger than 2 mm may have the merit of reducing the total number of air vent holes to be provided in the mold. However, this may result in too thick spews formed by the air vent holes and thus too wide base portions of spews (spew marks) left on the tire surface after the removal of the spews. And the result is markedly worsened appearance, motion performance, and anti-wear performance of the tire. For example, making the diameter of the air vent holes as large as 10 mm may cause the entry of a large amount of green rubber into the air vent holes, which may result in the formation of large and thick spews on the tire surface. Consequently, it is no longer possible to mold the green tire into the shape of the product tire. Also, if the diameter of the air vent hole is made too large, a small volume of air (gas) trapped in the angled portions of the mold for molding the angled parts of the blocks of the product tire may not be properly discharged from between the molding surface of the mold and the surface of the green tire. In such cases, it becomes sometimes impossible to continue the process of cure-molding.

In contract to this, making the diameter of the air vent holes smaller than 1 mm may have the demerit of requiring an increase in the total number of air vent holes to be provided in the mold. For example, halving the diameter of the air vent holes may result in four times the total number of air vent holes. Thus, the choice of smaller diameters for the air vent holes may result in thinner spews formed on the tire surface, which reduces the rigidity of the spews. The reduced rigidity of the spews weakens the repulsion of the spews to the cutter when the cutter is applied to them in the spew removal process after cure-molding. Consequently, the spews simply bend, making proper removal practically impossible. In such a case, the spew marks left on the tire surface after the spew removal process may be conspicuous in height and remain as they are without being removed. This affects adversely the appearance, motion performance, and anti-wear performance of the tire. And the product tire that cannot retain its proper appearance and other performances cannot be sold as merchandise.

Also, it has been known that the spews formed by the air vent holes are formed with approximately the same height whether the hole diameter is made large or small. This has been known to be true if no changes are made to the pressure reduction for suction of air from the back surface side of the mold, the pressure of the bladder to push the green tire against the mold from inside the tire, the curing conditions, such as the temperature of the mold and the bladder, the viscosity of uncured rubber of the green tire, or other conditions to be set at the time of cure-molding. The cure-molding is carried out under predetermined conditions according to the volume and weight of the green tire. Hence, as mentioned above, the rubber will not enter the air vent holes unboundedly even when the hole diameter is made large or small. Thus, it has been possible to control the height of spews caused by the air vent holes so long as the cure-molding is carried out under the predetermined conditions.

However, the inventor has found the following facts through painstaking investigations to solve the foregoing problems.

Firstly, he has made a finding that the spew height can be decreased without changing the predetermined cure-molding conditions if the air vent holes to be formed in the mold to discharge air (gas) from within are made in such a manner as to penetrate from the forming surface to the back surface of the mold and further if the width of the air vent holes opening in the molding surface is made incrementally smaller than 0.5 mm without changing the air discharge performance thereof (the area of the air vent holes opening in the molding surface remains the same) . That is, the shape of the round air vent hole of 1 mm to 2 mm in diameter is changed and made as small as 0.5 mm in width while maintaining the conventional air discharge performance. Then, it was found, the spew height remains unchanged despite the changes in the width of the air vent holes. However, it so turned out that with the width of the air vent holes reduced incrementally smaller than 0.5 mm, the spew height keeps decreasing despite attempts at keeping it constant. In this height decreasing range, the height of the formed spews keeps getting smaller from 7.5 mm with the decrease in the width of the air vent holes. As a result, it is no longer necessary to remove spews after the cure-molding process. Thus it was found that the tire shows all excellent performances without any detrimental effects on the appearance, motion performance, and anti-wear performance thereof.

The spews caused by the above-described air vent holes are very thin and low. Accordingly, without the removal of spews after cure-molding, the tire fitted on a vehicle will assume the same condition as the conventional tire with the spew marks worn and erased after a normal run of about 100 km on a dry road surface. Thus the tire shows generally excellent performances without any detrimental effects on the appearance, motion performance, and anti-wear performance thereof.

It is to be noted that for the spew marks after the spew removal with a cutter to wear off by running, the spews formed by conventional air vent holes (diameter of round hole: 1 mm to 2 mm) take about an initial run of about 300 km when they are on a winter tire of softer or more elastic tread rubber and about 500 to 1000 km when they are on a high-performance summer tire of passenger cars of harder or less elastic tread rubber.

Secondly, the inventor has found that with the width of the air vent holes smaller than 0.09 mm, the spews resulting from one air vent hole not only decrease in height, but also are formed intermittently along the tire surface in the direction of the entire length of the air vent hole. Note that the direction of the entire length of the air vent hole means the lengthwise direction of the opening of the hole in the molding surface.

Thirdly, it has been found that with the width of the air vent holes smaller than 0.06 mm, the spews resulting from one air vent hole not only decrease further in height, but also disappear after being formed intermittently along the tire surface. In other words, it was discovered that by making the width of the air vent holes smaller than 0.06 mm while retaining the air vent holes larger than 0 mm in width, air only can be discharged with little entry of rubber into the air vent holes.

It is to be noted, however, that when the width of the air vent holes was 0 mm (no air vent holes), the air discharge performance was zero, and the manufacture of a tire was rendered all but impossible because of scars and dents on the tire surface and air trapped inside.

Hereinafter, the range of the width of the air vent holes of equal to or larger than 0.09 mm and smaller than 0.5 mm as in the foregoing first finding will be referred to as the "spew height decreasing range" where the spew height keeps decreasing. Also, the range of the width of the air vent holes of smaller than 0.09 mm and equal to or larger than 0.06 mm as in the foregoing second finding will be referred to as the "intermittent spew range" where the spew height keeps decreasing and the spews formed intermittently in extension along the tire surface. Also, the range of the width of the air vent holes of smaller than 0.06 mm and larger than 0 mm as in the foregoing third finding will be referred to as the "missing spew range" where the spew height caused by one air vent hole keeps decreasing and the spews disappear after being formed in the length direction intermittently in extension along the tire surface.

In all of these ranges, namely, the spew height decreasing range, the intermittent spew range, and the missing spew range, the tire showed generally excellent performances in appearance, motion performance, and ant-wear performance without the removal of spews after cure-molding.

Furthermore, it was found that the tire appearance and such other performances as motion performance and anti-wear performance all keep improving incrementally in the spew height decreasing range, the intermittent spew range, and the missing spew range in this order.

Also, it was found that tire performances in appearance, motion performance, and anti-wear performance are better when the shape of air vent holes opening in the molding surface is smaller in width and longer in the total length along the molding surface. Therefore, the air vent holes are in a slit shape.

Here it is to be noted that the slit shape meant herein includes not only an aperture consisting of a single hole but also one aperture-like formation consisting of a plurality of holes arranged in a dotted line. And the air vent holes are arranged such that the ends thereof opening in the molding surface individually terminate in the molding surface, in an annular shape, or in a shape combining these.

Also, the width of the air vent holes meant herein is the dimension of the shorter side of the opening in the molding surface when viewed from the inner surface side, which is the molding surface provided with the air vent holes, toward the outer surface side of the mold.

Also, the width of spew meant herein is the dimension of the shorter side of a spew running along the tire surface, namely, the thickness thereof.

Also, the height of spew meant herein is the dimension of a spew extending in the direction away from the tire surface. For example, when a spew stands perpendicular to the tire surface, it is the dimension to the spew top in the normal direction from the tire surface. When a spew does not stand perpendicular to the tire surface, it is the dimension to the spew top along the direction of extension from the tire surface.

Also, the length of spew meant herein is the dimension of length of a spew formed by one air vent hole. That is, it is the length of a perpendicular bisector of the width of the spew extending along the tire surface. When the air vent hole is comprised of a plurality of slits, it is the total, or peripheral, length of the spews formed by the slits along the tire surface.

The present invention has been made based on the above-described findings, and the key features are as follows:
A mold for molding a rubber article to solve the afore-mentioned problems is configured to have a molding surface for molding uncured rubber and air vent holes penetrating from the molding surface to a back surface thereof. And a width of each of the air vent holes opening in the molding surface is larger than 0 mm and smaller than 0.5 mm, wherein each air vent hole comprises a slit extending along a rib groove molding portion formed in the molding surface and a slit extending along a lug groove molding portion formed in the molding surface and intersecting with the slit extending along the rib groove molding portion.

According to this arrangement, uncured rubber can be prevented from entering the air vent holes. As a result, the removal process of spews, which are whisker-like protrusions occurring on the surface of the rubber article after molding, can be eliminated. And this contributes to enhanced production efficiency of the rubber article. That is, the rubber article after molding displays an excellent appearance without the execution of a spew removal process.

Also, as another arrangement of the mold for a rubber article, air vent holes each comprise slits formed by a single hole or slits formed by a plurality of holes arranged in a dotted line formation. And a shape of the slit openings in the molding surface is such that ends thereof opening in the molding surface individually terminate in the molding surface, in an annular shape, or in a shape of combination thereof.

According to this arrangement, too, uncured rubber can be prevented from entering the air vent holes. As a result, the removal process of spews, which are whisker-like protrusions occurring on the surface of the rubber article after molding, can be eliminated. And this contributes to enhanced production efficiency of the rubber article. That is, the rubber article after molding displays an excellent appearance without the spew removal process.

In another aspect of the mold for molding a rubber article, the air vent holes in cross section perpendicular to a depth direction of the hole penetrating from the molding surface to the back surface are each linear, curved, crooked, or any combination thereof in shape, and they extend from the molding surface to the back surface in a shape linear, curved, crooked, or any combination thereof.

According to this aspect, the discharge direction of air can be set freely according to the structure of the curing apparatus, and the air vent holes can be provided in compliance with the shape of the molding surface.

In still another aspect of the mold for a rubber article, the mold is a tire mold for a sectional mold divided into plural numbers in a tire circumferential direction. And the mold has grooves on the back surface thereof extending from a division surface at one circumferential end to a division surface at the other circumferential end thereof with the air vent holes opening in these grooves. Accordingly, the air trapped between the tire surface and the molding surface can be discharged outside the mold.

In yet another aspect of the mold for a rubber article, air vent holes are provided in positions other than parts of the molding surface for molding recessed portions in uncured rubber.

According to this aspect, the spews formed on the tread surface of the tire can be eliminated by their friction with the road surface after a little run of the vehicle. Hence, it is possible to obtain a tire with excellent initial performances from the beginning of its use. Also, with little rubber entering the air vent holes, there will be few instances of rubber chips entering or clogging the air vent holes. And this will produce a tire with excellent appearance.

In still another aspect of the mold for a rubber article, the mold for molding a rubber article is manufactured by a rapid prototyping process.

According to this aspect, the cross-sectional shape and the depth-direction shape of the air vent holes can be set freely. At the same time, the mold can be manufactured in a short time.

Also, in various implementations of the method for manufacturing a tire, a tire of uncured rubber is cured (vulcanized) using the mold for molding a rubber article featuring any of the aspects as described above.

According to these implementations, there will be little detrimental effects of spews formed on the tire surface during molding on the initial performances and appearance of the tire. It is therefore possible to form a tire with excellent initial performances and appearance.

Also, in various implementations of a tire, the tire is molded by the mold for a rubber article featuring any of the aspects as described above. And spews formed on the tire surface by the air vent holes before removal thereof after the molding process are larger than 0 mm and smaller than 0.5 mm in width and larger than 0 mm and smaller than 7.5 mm in height.

According to these implementations, the removal of spews after cure-molding is no longer necessary, and the appearance, motion performance, and anti-wear performance of the tire can be improved.

Also, in another aspect of the tire, the spews formed are each smaller than 0.09 mm in width and larger than 0 mm and smaller than 2.0 mm in height.

According to this aspect, the spews formed by a single air vent hole are not continuous, but are formed intermittently in the direction of extension of the air vent hole. As a result, the removal of spews after cure-molding is no longer necessary, and the appearance, motion performance, and anti-wear performance of the tire can be improved.

Also, in still another aspect of the tire, the spews are each smaller than 0.06 mm in width and larger than 0 mm and 0.5 mm or smaller in height.

According to this aspect, the removal of spews after cure-molding is no longer necessary, and the appearance, motion performance, and anti-wear performance of the tire can be improved.

In further aspects of the tire, each of the spews changes in height in a lengthwise direction along the tire surface molded by one air vent hole, or each of the spews is formed intermittently in a lengthwise direction along the tire surface molded by one air vent hole.

It is to be noted that the foregoing summary of the invention does not necessarily recite all the features essential to the invention. Therefore, it should be understood that individual configurations forming groups of features may also constitute the invention.

### BRIEF DESCRIPTION OF THE DRAWINGS

FIG. 1 is across-sectional view of a curing apparatus.
FIG. 2 is illustrations showing a molding surface and a back surface, respectively, of a tread mold.
FIG. 3 is an enlarged view of a center block molding portion.
FIG. 4 is an enlarged perspective view of an air vent hole provided in a center block molding portion.
FIG. 5 is an enlarged view of a shoulder block molding portion.
FIG. 6 is enlarged perspective illustrations of air vent holes provided in a shoulder block molding portion.
FIG. 7 is illustrations showing various states of tire molding in the center block molding portion.
FIG. 8 illustrate depth-direction cross sections of air vent holes.
FIG. 9 is illustrations showing the shapes of opening of air vent holes.
FIG. 10 is illustrations showing other shapes of opening of air vent holes.
FIG. 11 is an enlarged perspective view showing another embodiment of an air vent hole.
FIG. 12 is an enlarged perspective view showing still another embodiment of an air vent hole.
FIG.13 is an illustration showing an embodiment of an additive manufacturing apparatus.
FIG. 14 is a table showing the results of various performance evaluations of spews and tires.
FIG. 15 is a graph showing a relationship between the width of air vent holes and the height of spews.
FIG. 16 is an illustration schematically showing examples of spew formations.
FIG. 17 is a partial cross section showing a tire curing apparatus equipped with a tire curing mold according to another embodiment of the present invention.
FIG. 18 is a perspective illustration of a pattern plate constituting a tire curing mold as shown in FIG. 17.
FIG. 19 is a cross section taken along arrowsA-A of FIG. 18.
FIG. 20 is a cross section taken along arrows B-B of FIG. 18. FIG. 21 is a cross section of a pattern plate constituting a tire curing mold according to a first variation of the present invention.
FIG. 22 is a cross section of a pattern plate constituting a tire curing mold according to a second variation of the present invention.
FIG. 23 is a cross section of a pattern plate constituting a tire curing mold according to a third variation of the present invention.

### MODE FOR CARRYING OUT THE INVENTION

The invention will now be described in detail based on embodiments which do not intend to limit the scope of the claims of the present invention but exemplify the invention.

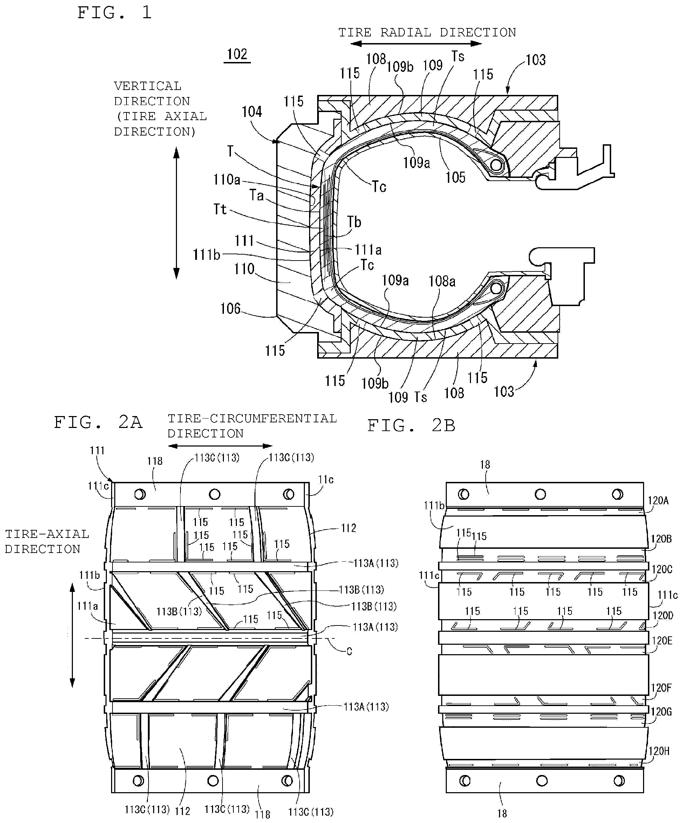

FIG. 1 is a half cross-sectional view schematically showing a main section of a curing apparatus 102 for cure-molding a tire, which is a rubber article. The mold according to the present embodiment is disposed within the curing apparatus 102 as shown in FIG. 1. The curing apparatus 102 is of a so-called sectional mold structure consisting of a pair of side mold 103, 103, which molds the side regions Ts of the outer surfaces of the tire T, a tread mold 104, which molds the tread region of the tire T, and a bladder 105, which molds the inner surfaces of the tire T. The side molds 103, 103 are disposed in upper and lower positions opposite to each other and are each formed in an approximately disk shape circumferentially along the side region Ts of the tire T. The tread mold 104, which is disposed between the upper and lower side molds 103, 103, consists of a plurality of sector molds 106 arranged annularly along the circumferential direction of the tire T. The side molds 103, 103 each include a base board 108 and a side mold 109. The base board 108 is an attachment for securing the side mold 109 and has a holding surface 108a for holding the side mold 109. The side mold 109 has a molding surface 109a, which has a molding pattern for carrying out a predetermined pattern molding on the surface of the side region Ts of the green tire T, and a back surface 109b, which is shaped in the same way as the holding surface 108a. The sector molds 106 each include a sector segment 110 and a tread mold 111. The sector segment 110 is an attachment for securing the tread mold 111, which is divided into a plurality of division pieces, and has a holding surface 110a for holding the tread mold 111. The tread mold 111, which is a tread molding member, has a molding surface 111a, which has a molding pattern (tread pattern) for carrying out a predetermined pattern molding on the surface of the tread region Tt of the green tire T, and a back surface 111b, which is shaped in the same way as the holding surface 110a. Also, provided in the side mold 109 and the tread mold 111 are a plurality of air vent holes 115 for discharging air trapped between the molding surfaces 109a and 111a and the outer surface Ta of the tire T during tire molding to the back surface sides 109b and 111b of the molds 109 and 111, respectively.

The side mold 109 is so configured as to be vertically movable together with the base board 108. And the tread mold 111 is so configured as to be radially movable together with the sector segment 110. The curing apparatus 102 has a molding cavity space enclosing the whole outer periphery of the green tire T. To do so, the plurality of tread molds 111 are first formed into a circle surrounding the tire periphery with the division faces 111c thereof brought into contact with each other. Then the upper and lower side molds 109, 109 are brought into contact with the tread molds 111 in such a manner as to close the openings. After a green tire T is introduced in the molding cavity space, the bladder 105 placed in the interior of the tire T is inflated. With the bladder 105 inflated, the tire T is pressed against the side molds 109, 109 and the tread molds 111. At the same time, air trapped between the outer surface Ta of the tire T and the surfaces of the side molds 109, 109 and the tread molds 111 is discharged through the air vent holes 115 from the molding surface sides 109a and 111a to the back surface sides 109b and 111b of the side molds 109, 109 and the tread molds 111, respectively. Through this process, the molding patterns formed on the molding surfaces 109a and 111a of the side molds 109, 109 and the tread molds 111, respectively, are transferred onto the exterior surface (outer periphery) of the tire T. And with the molding patterns thus transferred, the tire T is cure-molded by heating the tire T at predetermined temperatures. Then, on completion of cure-molding, the mold is opened with the side molds 109, 109 and the tread molds 111 moving away from each other, and the tire T after the cure-molding is stripped out of the mold.

Hereinbelow, a description is given of the side molds 109, 109 and the tread molds 111 for molding the outer periphery of the tire T. For convenience of explanation, however, the tread mold 111 is used as an example.

FIG. 2 is illustrations showing a molding surface and a back surface, respectively, of a tread mold 111. As illustrated in FIG. 2A, the tread mold 111 on the molding surface 111a side has a contact area molding portions 112 for molding the contact area of the outer periphery Ta of the tire T, a plurality of groove molding portions 113 for molding the tread region Tt, and attaching sections 118. The contact area molding portions 112 are the base section of the molding surface 111a so formed as to mold the contact area of the tire T at predetermined curvatures. The plurality of groove molding portions 113 are so disposed as to project to a predetermined height from the surface of the contact area molding portions 112. The groove molding portions 113 include rib groove molding portions 113A for molding rib grooves in the tire T by extending in the tire circumferential direction, for instance, on the contact area molding portions 112, lug groove molding portions 113B for molding lug grooves by extending in the tire axial direction, and shoulder groove molding portions 113C for molding shoulder grooves. These groove molding portions 113 form recesses in the surface of the green tire. And the molding surface 111a having the recessed and raised parts mold blocks (land sections) of the tire with the recesses surrounded by the groove molding portions 113, such as the rib groove molding portions 113A, lug groove molding portions 113b, and shoulder groove molding portions 113C. The attaching sections 118 are provided in the tire circumferential direction in such a manner as to fringe the respective axial ends of the contact area molding portions 112. The tread mold 111 is attached to the sector segment 110 via the attaching sections 118. Provided in the contact area molding portions 112, in positions avoiding the groove molding portions 113, are a plurality of air vent holes 115 for discharging air arising from the rubber composition trapped between the outer surface Ta of the tire T and the molding surface 111a of the tread mold 111 during cure-molding. The air vent holes 115 are provided in a shape of thin slit penetrating from the contact area molding portions 112 on the molding surface 111a to the back surface 111b.

As shown in FIG. 2B, a plurality of back surface grooves 120A to 120H at predetermined intervals in the tire direction are provided in the back surface 111b of the tread mold 111 which faces radially outward. The back surface grooves 120A to 120H are disposed in positions out of alignment with the lug groove molding portions 113A on the molding surface 111a in such a manner as to avoid the radially outer portions of the lug groove molding portions 113A, for instance. The back surface grooves 120A to 120H extend continuously in the circumferential direction from the division face 111c on one side to the division face 111c on the other side of the tread mold 111. The circumferential ends of the back surface grooves 120A to 120H open in the respective division faces 111c. The cross section of the back surface grooves 120A to 120H is formed in a rectangular shape, for instance.

The respective ends of the back surface grooves 120A to 120H reach the circumferential edges of the tread mold 111 such that the air led into the back surface grooves 120A to 120H of the tread mold 111 is discharged at the division ends 111c, which are the circumferential edges of the tread mold 111. The above-described air vent holes 115 open in the back surface grooves 120A to 120H.

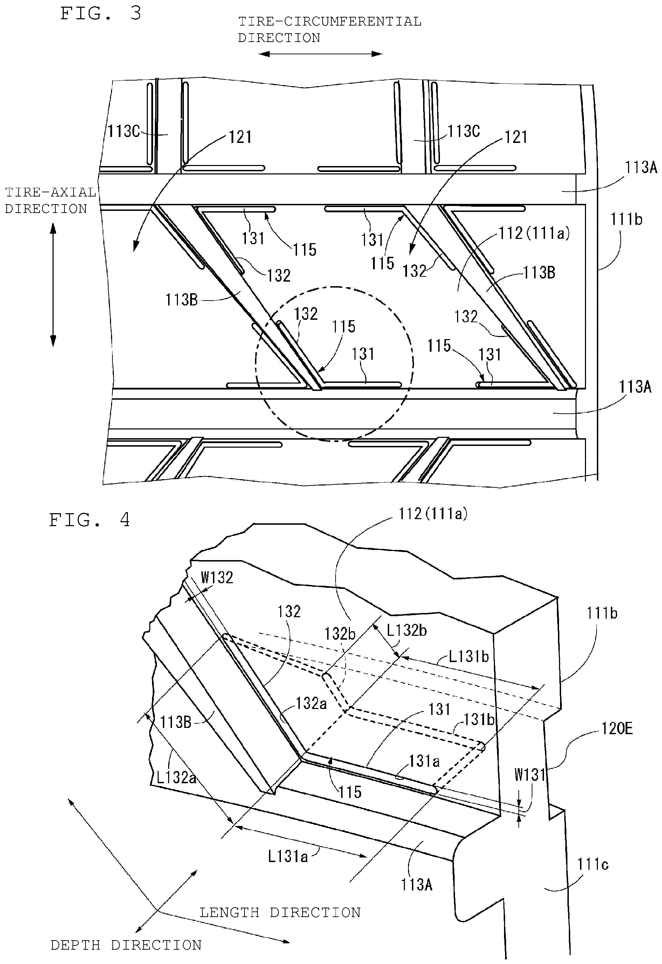

FIG. 3 is an enlarged view showing one of center block molding portions 121 on the tread mold 111 for molding the center blocks of the tire. Hereinbelow, a description is given of the air vent holes 115 with reference to the illustration. The center block molding portions 121 are each defined by the axially neighboring rib groove molding portions 113A, 113A and the circumferentially neighboring lug groove molding portions 113B, 113B. A plurality of air vent holes 115 are provided in the contact area molding portions 112 which have the center block molding portions 121 defined by the rib groove molding portions 113A, 113A and the lug groove molding portions 113B, 113B. That is, the air vent holes 115 are disposed in the center block molding portions 121 in positions other than the rib groove molding portions 113A and the lug groove molding portions 113B.

The air vent holes 115 are formed in positions avoiding the rib groove molding portions 113A, 113A and the lug groove molding portions 113B, 113B. The air vent holes 115 are formed in thin slits penetrating from the molding surface 111a to the back surface 111b. The air vent holes 115 are disposed, for instance, in such a manner as to extend along the rib groove molding portions 113A and the lug groove molding portions 113B. In the following description, it should be noted that the lengthwise direction of each opening of the air vent holes 115 opening in the molding surface 111a will be referred to as the length direction. Also, the widthwise direction of each opening thereof will be referred to as the width direction. Hereinbelow, therefore, unless otherwise specified, such as the "axial direction of the tire", simply the width direction is the width direction of the opening of the air vent hole. Also, the direction from the molding surface 111a toward the back surface 111b will be referred to as the depth direction.

As shown in Fig. 3, the air vent holes 115 at the center block molding portions 121 open in L shapes, respectively, along the corners of the contact area molding portions 112 of the center block molding portions 121. That is, the air vent holes 115 are, for instance, so formed as to be holes penetrating from the molding surface 111a to the back surface 111b with one end of the slit 131 extending along the rib groove molding portion 113A and one end of the slit 132 extending along the lug groove molding portions 113B intersecting with each other at the corner.

FIG. 4 is an enlarged perspective view of an air vent hole 115 encircled by a chain line in FIG. 3. As shown in the illustration, the slit 131 and the slit 132 constituting an air vent hole 115 linearly extend from the molding surface 111a side to the back surface 111b side and open in the back surface 111b side, respectively. That is, the slit 131 and the slit 132 penetrate linearly from the molding surface 111a side to the back surface 111b side along the tire-radial direction of the contact area molding portion 112. The slit 131 disposed along the rib groove molding portion 113A has the same dimension for the length L131a of the opening 131a on the molding surface 111a side and the length L131b of the opening 131b on the back surface side. That is, the slit 131 is so formed as to have the cross-sectional shape unchanged in the depth direction. The slit 132 is so formed as to have different opening sizes between the opening 132a on the molding surface 111a side and the opening 132b on the back surface 111b side. In other words, the length L132a of the opening 132a and the length L132b of the opening 132b are formed differently from each other in such a manner that the cross-sectional shape of the slit 132 gets gradually smaller from the opening 132a on the molding surface 111a side to the opening 132b on the back surface 111b side.

Also, the width W131 of the slit 131 and the width W132 of the slit 132 are set within a range of larger than 0 mm and smaller than 0.5 mm, for instance. This can inhibit the entry of rubber of the tire surface into the air vent hole 115. It is to be noted that in the following description, the width W of each slit is assumed to be of the same dimension from one end to the other end of the length of the opening on the molding surface 111a side and the opening on the back surface 111b side. But this is not a limitation, and the width W may change within a range to be specified below from one end to the other end thereof.

Also, the lengths L131a and L131b of the slit 131 and the lengths L132a and L132b of the slit 132 may be set shorter in parts of the tread mold 111 where strength is required and longer in parts thereof where strength is not required. Also, where there is any space restriction, the lengths L may be set as appropriate. It is to be noted that the length here refers to the lengthwise dimension of the opening of a slit, and the width to the widthwise dimension of the opening of the slit.

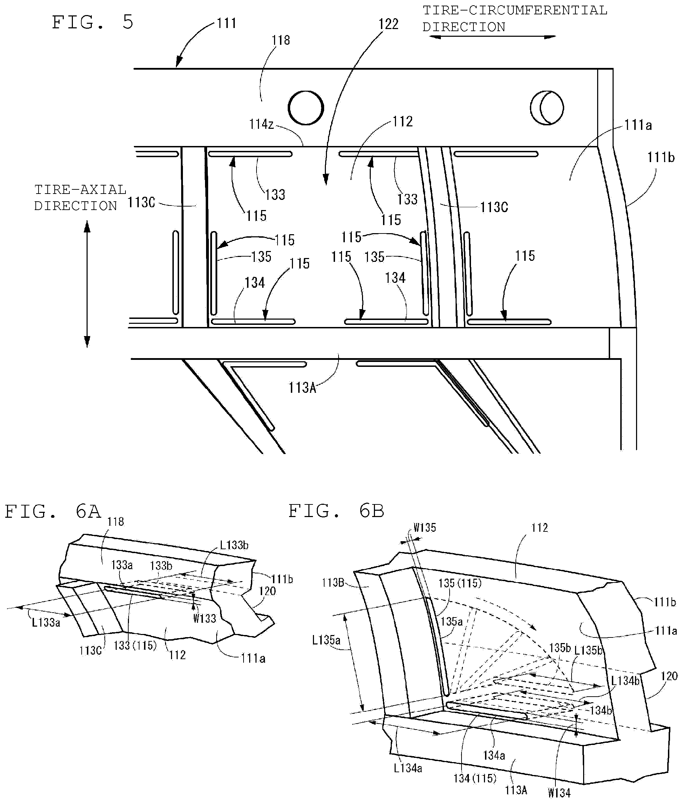

FIG. 5 is an illustration showing a shoulder block molding portion 122 for molding a shoulder block on a tire. The air vent holes 115 at the shoulder block molding portion 122 consist of slits 133 extending in the tire circumferential direction on the upper side and slits 134 and slits 135 in approximately L-shaped arrangement on the lower side, with the tread mold 111 mounted inside the curing apparatus 102. The slits 133 each extend in an I shape along the boundary edge 114z between the attaching section 118 and the contact surface molding portion 112 on the molding surface 111a side, with one end thereof opening in the molding surface 111a near the shoulder groove molding portion 113C. The slits 134 each extend along the rib groove molding portion 113A, and one end thereof opens in the molding surface 111a in an I shape near the shoulder groove molding portion 113C. The slits 135 each extend along the shoulder groove molding portion 113C, and one end thereof opens in the molding surface 111a side forming an L shape with the slit 134 nearby. That is, there is no intersecting portion between the slits 134 and the slits 135 on the molding surface 111a side.

FIG. 6 is enlarged perspective views of an air vent hole 115 provided on the upper side and air vent holes 115, 115 provided on the lower side of the shoulder block molding portion 122. As shown in FIG. 6A, the slit 133 forming the upper air vent hole 115 extends linearly from the molding surface 111a side to the back surface 111b side, thus penetrating in the tire radial direction, and opens in the back surface 111b. The length L133a of the opening 133a of the slit 133 on the molding surface 111a side and the length L133b of the opening 133b of the slit 133 on the back surface 111a side are of the same dimension. That is, the slit 133 is formed such that the cross-sectional shape thereof does not change in the depth direction. Also, the width W133 of the slit 133 is set within a range of larger than 0 mm and smaller than 0.5 mm, for instance. This will inhibit the entry of rubber of the tire surface into the air vent hole 115.

The slit 134 forming one the lower air vent holes 115 extends linearly from the molding surface 111a side to the back surface 111b side, thus penetrating horizontally from the molding surface 111a to the back surface 111b, and opens in the back surface 111b. The slit 134 provided along the rib groove molding portion 113A has the length L134a of the opening 134a on the molding surface 111a side and the length L134b of the opening 134b on the back surface 111b side which are of the same dimension. That is, the slit 134 is formed such that the cross-sectional shape thereof does not change in the depth direction. The other slit 135 is so formed that the opening 135a thereof on the molding surface 111a side and the opening 135b thereof on the back surface 111b side have different orientations from each other. The slit 135 is formed in a twisted manner such that the opening 135a thereof on the molding surface 111a side extends along the lug groove molding portion 113B, and the opening 135b thereof on the back surface 111b side extends along the rib groove molding portion 113A, thus extending in parallel with the opening 134b on the back surface 111b side of the slit 134. That is, the slit 135 extends spirally from the molding surface 111a side to the back surface 111b side within the contact surface molding portion 112. With the opening 135b on the back surface 111b side oriented in the same direction as the opening 134b of the slit 134 on the back surface 111b side like this, the width of the back surface grooves 120A to 120H provided on the back surface 111b can be made narrower in width.

The width W133 of the slit 133, the width W134 of the slit 134, and the width W135 of the slit 135 are each set within a range of larger than 0 mm and smaller than 0.5 mm, for instance. This will inhibit the entry of rubber of the tire surface into the air vent holes 115.

Also, predetermined lengths are set for the lengths L133a and L133b of the slit 133, the lengths L134a and L134b of the slit 134, and the lengths L135a and L135b of the slit 135. For example, the length is set shorter when the strength is required by the tread mold 111 or set longer when the strength is not required. Also, where an air vent hole 115 has to be provided in a limited space, a formable length must be selected. The shape and extension shape in the depth direction of the air vent holes 115 will be discussed later.

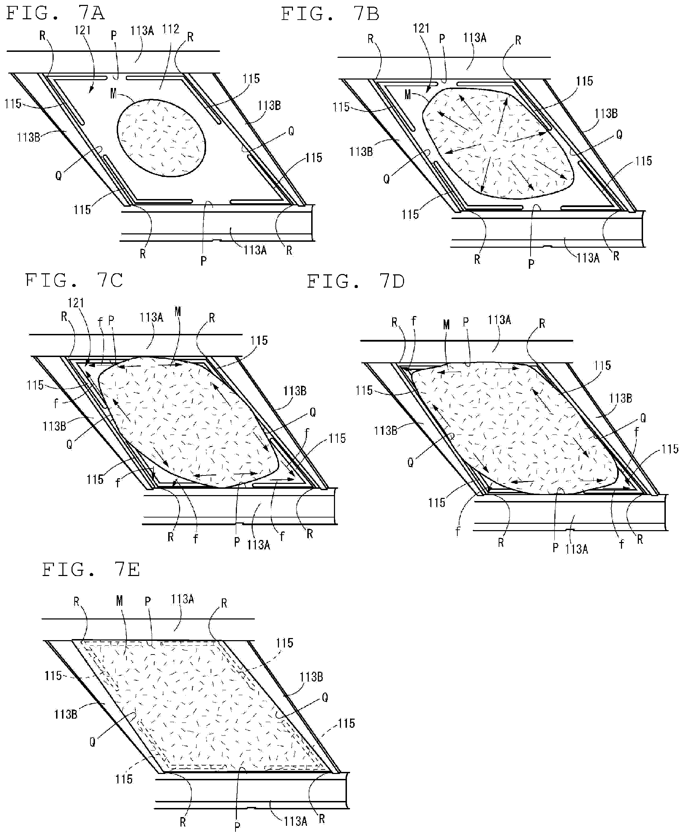

FIG. 7 is illustrations showing various stages of tire molding in a center block molding portion. As shown in FIG. 7A, rubber of uncured (green) tire, pressed by the bladder, first comes in contact with the contact surface molding portion 112 enclosed by the rib groove molding portions 113A, 113A and the lug groove molding portions 113B, 113B in an elliptical shape, for instance, near the center thereof. M in the illustration indicates the contact face of the tire surface in contact with the surface of the contact surface molding portion 112.

Next, as shown in FIG. 7B, the contact face M between the tire surface and the surface of the contact surface molding portion 112, pressed by the bladder, gradually spreads in all directions toward the rib groove molding portions 113A, 113A and the lug groove molding portions 113B, 113B. Along with this, the air in the space enclosed by the tire surface, the rib groove molding portions 113A, 113A, and the lug groove molding portions 113B, 113B is discharged through the air vent holes 115 provided in the four corners.

Next, as shown in FIG. 7C, the rubber of the green tire in contact with the contact surface molding portion 112 is prevented by the rib groove molding portions 113A, 113A and the lug groove molding portions 113B, 113B from spreading further in the circumferential and axial directions therebeyond. And as the rubber spreads in the directions extending along the rib groove molding portions 113A and the lug groove molding portions 113B, the air in the space enclosed by the tire surface, the rib groove molding portions 113A, 113A, and the lug groove molding portions 113B, 113B is pushed out in the length directions of the air vent holes 115 provided in the four corners along the rib groove molding portions 113A, 113A and the lug groove molding portions 113B, 113B.

Next, as shown in FIG. 7D, the contact face M, further pressed by the bladder, spreads along the sides of the rib groove molding portions 113A toward the intersecting portion P of the contact surface molding portion 112 and the rib groove molding portions 113A. And along with this, the air is pushed out through the air vent holes 115 along the rib groove molding portions 113A as indicated by the arrows f. Also, the contact face M spreads along the sides of the lug groove molding portions 113B toward the intersecting portion Q of the contact surface molding portion 112 and the lug groove molding portions 113B. And along with this, the air is pushed out through the air vent holes 115 along the lug groove molding portions 113B as indicated by the arrows f.

And finally, as shown in FIG. 7E, all the air is pushed out through the air vent holes 115 in the four corners, and the rubber is pressed against the intersecting portions R of the contact surface molding portion 112, the rib groove molding portions 113A, and the lug groove molding portions 113B, which are the corners of the center block molding portion 121. As a result, the center block is molded into a predetermined shape. Thus the cure-molding progresses, and the air in the space enclosed by the tire surface, the rib groove molding portions 113A, 113A, the lug groove molding portions 113B, 113B, and the contact surface molding portion 112 is discharged from the center block molding portion 121 enclosed by the rib groove molding portions 113A, 113A, the lug groove molding portions 113B, 113B, and the contact surface molding portion 112. Accordingly, no air will be trapped in the center block molding portion 121, thus occurrence of bare marks can be prevented.

In this manner, the rubber on the tire surface side undergoes deformation and movement as it is molded in the space (block) enclosed by the rib groove molding portions 113A, 113A, the lug groove molding portions 113B, 113B, and the contact surface molding portion 112. Therefore, the air vent holes 115 so provided as to extend along the movement of the rubber can efficiently and reliably discharge the air. That is, the air vent holes 115 disposed along the above-mentioned intersecting portions P, Q, and R as shown in FIG. 3 can efficiently and reliably discharge the air and prevent the occurrence of conspicuous bare marks on the tire surface. Note that "bare marks" meant here are dents formed on the tire surface resulting from a molding process with residual air trapped between the molding surface 111a and the tire surface.

Referring back to FIG. 2B, the back surface grooves 120A to 120H formed on the back surface 111b of the tread mold 111 are formed in positions corresponding to the air vent holes 115 provided in the above-described center block molding portion 121 and the shoulder block molding portion 122. The openings in the back surface 111b of the air vent holes 115 are so provided that they open within the back surface grooves 120A to 120H. More specifically, the back surface groove 120A is provided in a position corresponding to the openings of the air vent holes 115 (slits 133) on the upper side of the shoulder block molding portion 122, and the back surface groove 120B is provided in a position corresponding to the openings of the air vent holes 115 (slits 134 and 135) on the lower side of the shoulder block molding portion 122. Also, the back surface groove 120C is provided in a position corresponding to the openings of the air vent holes 115 on the upper side of the center block molding portion 121, and the back surface groove 120D is provided in a position corresponding to the openings of the air vent holes 115 on the lower side of the center block molding portion 121. The back surface grooves 120A to 120D are so designed that the grooves of adjacent tread molds 111 are continuous with each other when the division faces 111c of the adjacent tread molds 111 are butted to each other. As for the back surface grooves 120E to 120H, which are symmetrical to the back surface grooves 120A to 120D with respect to the axial center line of the tire, a detailed description thereof is omitted.

Thus, the air having been discharged to the back surface grooves 120A to 120H through the air vent holes 115 is discharged from the molding space enclosed by the mold to the outside after passing through the air discharge passages formed between the surface of the sector segment 110 and the back surface grooves 120A to 120H and the not-shown discharge ports leading from the back surface grooves 120A to 120H to the outside.

In the foregoing embodiment, a description has been given of the air vent holes 115 as being provided along the rib groove molding portions 113A and the lug groove molding portions 113B. More preferably, however, the air vent holes 115 are provided such that the hole walls in the lengthwise direction of the slits are positioned on the extension of the side surfaces of the rib groove molding portions 113A and the side surfaces of the lug groove molding portions 113B. This will discharge air more efficiently. Also, in this case, even if the rubber strays into the slits 131 and 132 of the air vent holes 115 at the time of tire molding, the resulting spews will be thin spews of about 0.5 mm in height along the edges of the center block. And they may be considered less detrimental in appearance. Moreover, the edges of the center blocks and shoulder blocks on the tire come in contact with the road surface most frequently, thus being exposed to great friction. Consequently, the spews formed with about 0.5 mm height along the edges will be immediately removed by friction. Thus, the tire can display its design performance from the initial stage of its use.

In the foregoing embodiment, a description has been given of the air vent holes 115 in the center block molding portions 121 and the shoulder block molding portions 122 as being formed extending in the tire radial direction. But this is not a limitation. As described above, the contact surface molding portions 112 of the center block molding portions 121 is so provided as to rise in the vertical direction in the tread mold 111. Accordingly, the air flowing through the air vent holes 115 from the molding surface 111a side toward the back surface 111b side passes through the air vent holes 115 at the shortest distance and is discharged efficiently from the molding surface 111a side toward the back surface 111b side. However, by arranging the air vent holes 115 such that the shape thereof in the depth direction extends downward with respect to the tire radial direction, the reverse flow of air from the back surface 111b side toward the molding surface 111a side can be prevented even when a gap is created between the surface of the contact surface molding portion 112 and the tire surface due to some cause.

It is to be noted that according to the present embodiment, the cross-sectional shape of the air vent hole 115 having an opening 115a on the molding surface 111a side and the other opening 115b on the back surface 111b side is not subject to the limitation of the above example. For instance, the shoulder block molding portions 122 for molding shoulder blocks on the tire are positioned vertically in the tread mold 111 as shown in FIG. 1. This particular region, where air can be trapped easily, requires the discharge of more air than the center block molding portion 121. In this case, therefore, the arrangement may be such that the cross section of the passage is made gradually larger with the opening area on the back surface 111b side larger than the opening area on the molding surface 111a side so as to increase the discharge amount of air per air vent hole 115.

Also, the air vent holes 115 may be formed such that they change in both the depth-direction shape and cross-sectional shape. In the foregoing embodiment, a description has been given of the tread mold 111 as being provided with a plurality of back surface grooves 120A to 120H on the back surface 111b thereof. Yet, when a mold is fabricated by an additive manufacturing method, the contact surface molding portions 112, which serve as a base for the tread mold 111, are sometimes designed thinner to shorten the molding time. In such a case, forming a plurality of back surface grooves 120A to 120H can run a risk of reducing the strength of the tread mold 111.

As shown in FIG. 2A, the above-mentioned tread mold 111 is provided with a plurality of lug groove molding portions 113B and shoulder groove molding portions 113C serving as bridging members for rib grove molding portions 113A running in the circumferential direction. Thus these reinforcement members at the contact surface molding section impart rigidity to the mold. As a result, a plurality of back surface grooves 120A to 120H can be provided on the back surface 111b. However, when the arrangement of the groove molding portions 113 has some directivity (orientation) as with the case of a main tread pattern consisting of rib grooves or lug grooves, for instance, it is possible that the mold cannot have sufficient strength. In such a case, the number of the back surface grooves 120A to 120H to be provided on the back surface 111b may have to be reduced, and at the same time, they may have to be provided in positions that do not compromise strength. Under these circumstances, the shape extending in the depth direction of the air vent holes 115 or the cross-sectional shape may be changed in such a manner that the positions of the openings in the back surface 111b of the air vent holes 115 in the contact surface molding portions 112 are concentrated in the back surface grooves 120.

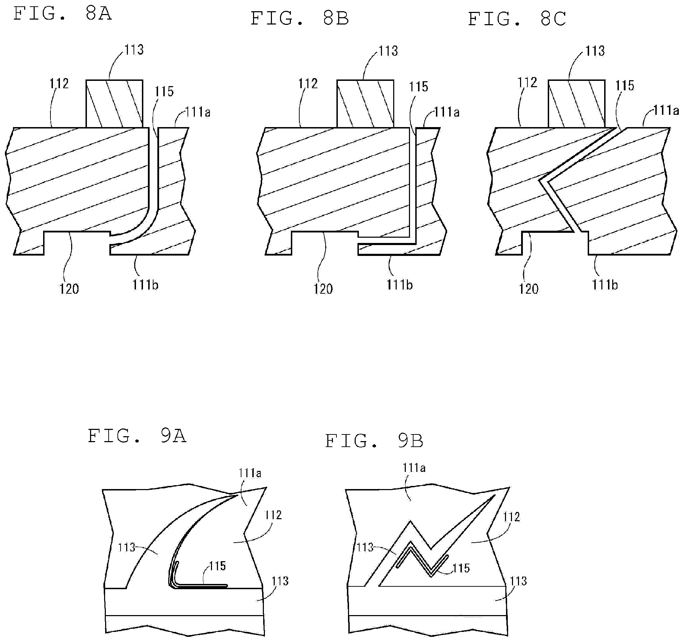

In other words, the shape of extension of the air vent hole 115 in the depth direction may be curved from the molding surface 111a toward the back surface 111b as shown in FIG. 8A, L-shaped as shown in FIG. 8B, crooked in a V shape as shown in FIG. 8C, or any combination of these. The air vent hole 115 may be in any shape in the depth direction as long as it penetrates from the molding surface 111a to the back surface 111b. Preferably, however, the air vent hole 115 should be so formed that the cross-sectional area thereof in the depth direction from the molding surface 111a to the back surface 111b retains the area of the opening thereof.

Also, the shape of the opening of the air vent hole 115 on the molding surface 111a side, that is, the cross-sectional shape perpendicular to the depth direction of the air vent hole 115 is not limited to the I shape or the L shape as described in the foregoing embodiment. For example, it may be formed in a curve along a curved groove molding portion 113 as shown in FIG. 9A. Also, it may be formed in a zigzag shape along a zigzag groove molding portion 113 as shown in FIG. 9B.

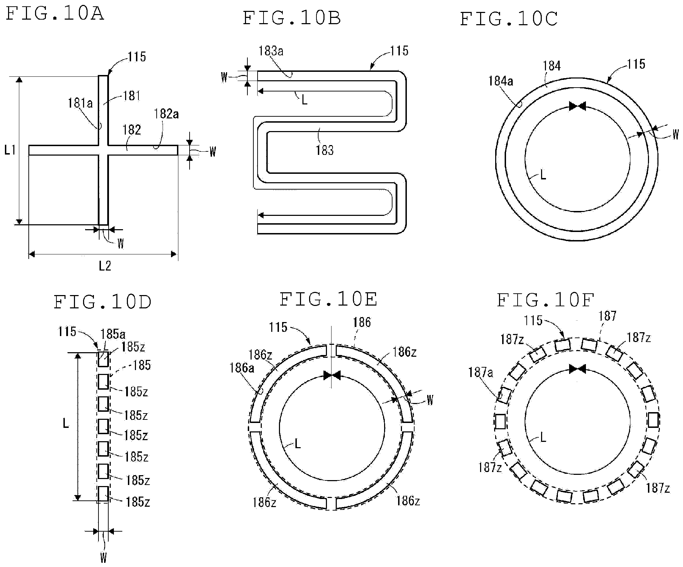

Also, other shapes of the opening of the air vent hole 115 may be a "+" shape as shown in FIG. 10A, in a rectangularly crooked series as shown in FIG. 10B, annular as shown in FIG. 10C, in an intermittent straight line as shown in FIG. 10D, intermittently annular as shown in FIG. 10E and FIG. 10F.

The openings 181a and 182a shown in FIG. 10A are the shapes of opening in the molding surface of an air vent hole 115 which is formed with two I-shaped slits 181 and 182 penetrating from the molding surface to the back surface intersected with each other in a "+" shape. In this case, the ends of the slits 181 and 182 opening in the molding surface are terminating in their respectively different positions in the molding surface. Also, the slit length of the air vent hole 115 in this state is deemed to be the sum of the length L1 of the slit 181 and the length L2 of the slit 182. It is to be noted that the width W of the slits 181 and 182 shown in the illustration is of the same dimension.

The opening 183a shown in FIG. 10B is in the shape of opening in the molding surface of an air vent hole 115 which is formed as one slit in a rectangularly crooked series penetrating from the molding surface to the back surface. In this case, the ends of the slit 183 opening in the molding surface are terminating in their respectively different positions in the molding surface. Also, the slit length L of the air vent hole 115 in this state is the total length from one end to the other along the crooked shape.

The opening 184a shown in FIG. 10C is in the shape of opening in the molding surface of an air vent hole 115 which is formed as an annular slit 184 penetrating from the molding surface to the back surface. In this case, it is desirable that the dislocation in positional relationship between the inner peripheral side and the outer peripheral side of the slit 184 is prevented by linking the inner periphery and the outer periphery with a not-shown support means.

The opening 185a shown in FIG. 10D is in the shape of opening in the molding surface of an air vent hole 115 which is formed as one slit consisting of a plurality of holes arranged intermittently in a straight line. The apparent slit length L of the air vent hole 115 in this state can be deemed to be the total length from one end to the other along the slit 185.

Also, the opening 186a shown in FIG. 10E is the shape of opening in the molding surface of an air vent hole 115 which is formed in an annular slit 186 consisting of a plurality of arc-shaped holes 186z penetrating from the molding surface to the back surface. The slit length L of the air vent hole 115 in this state is such that the circumferential length of one round of the slit 186 is deemed to be apparent length as a bulk specific gravity relative to a true specific gravity. In actuality, it goes without saying that the true slit length L is the sum total of the respective slit hole lengths.

Also, the opening 187a shown in FIG. 10F is the shape of opening in the molding surface of an air vent hole 115 which is formed in an annular slit 187 with a plurality of holes 187z shorter in circumferential length than the arc-shaped holes 186z as shown in FIG. 10E arranged intermittently and penetrating from the molding surface to the back surface. The slit length L of the air vent hole 115 in this state is such that the circumferential length of one round of the slit 185 is deemed to be apparent length.

It is to be noted that the width W of the opening of the slits 181 to 187 as shown in FIGS. 10A to 10F is set to a value smaller than 0.5 mm. Also, it is to be understood that "annular" as used herein refers also to any endless shape, such as circular or rectangular.

As described above, it is possible to effectively locate air vent holes in positions where bare marks may otherwise most likely result by selecting the cross-sectional shape opening on the molding surface 111a side. Thus the occurrence of bare marks can be prevented by the minimum necessary number of air vent holes 115. Additionally, there may be cases where the positions of air vent holes 115 can interfere with the groove molding portions 113 provided on the molding surface 111a or where the marks of air vent holes 115 left on the outer surface Ta of the tire after molding may compromise the appearance thereof. In such cases, the slit length L of the air vent holes 115 may be changed without causing a loss in their necessary capacity to discharge air. Or one slit shape of the air vent hole 115 may be divided into a plurality of slits, and they may be located in a less conspicuous position.

It should be noted that in the foregoing embodiment, a description has been given of the air vent holes 115 as penetrating from the molding surface 111a to the back surface 111b. However, the air vent holes 115 may penetrate from the molding surface 111a to elsewhere than the back surface 111b.

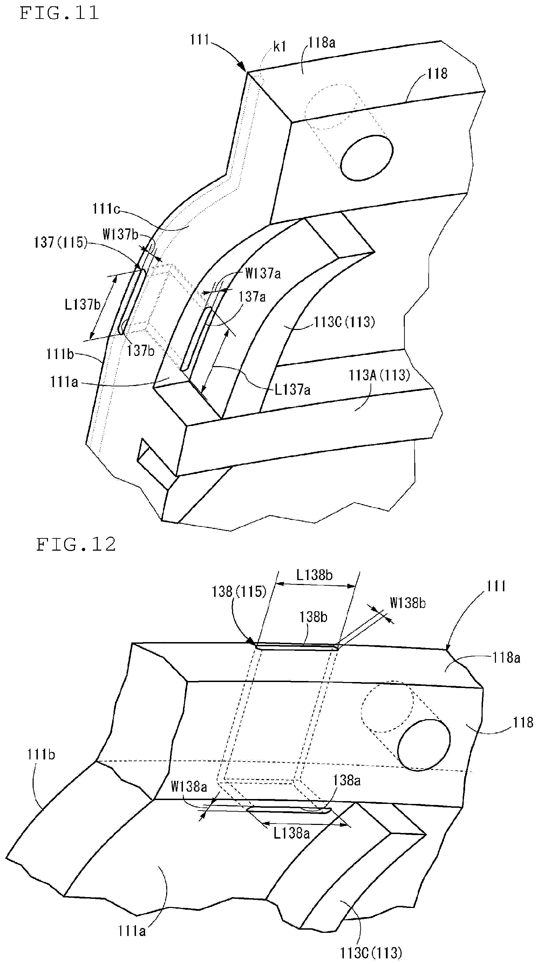

FIG. 11 is an enlarged perspective view of an air vent hole 115 penetrating from the molding surface 111a to the division surface 111c. As shown in the illustration, the air vent hole 115 extends from the molding surface 111a to the division surface 111c of the tread mold 111. The slit 137 constituting the air vent hole 115 first extends in a straight line for a certain length from the molding surface 111a side toward the back surface 111b side and then changes the direction of extension in a crooked manner, for instance, in a depth position before opening in the division surface 111c. The slit 137 as shown in the illustration is, for instance, formed with the same dimension for the length L137a of the opening 137a on the molding surface 111a side and the length L137b of the opening 137b on the division surface 111c side such that the cross-sectional shape remains unchanged in the depth direction. Also, the width W137a of the slit 137 on the molding surface 111a side and the width W137b thereof on the division surface 111c side are, for instance, set in a range of 0.001 mm or more and 0.4 mm or less, respectively. It is to be noted that the slit 137 may be formed with the cross-sectional area perpendicular to the depth direction varying in the section from the opening 137a on the molding surface 111a side to the opening 137b on the division surface 111c side as long as the width W137a and the width W137b are within the above-mentioned range. When the opening 137b as the discharge port of air is provided in the division surface 111c, there may be cases where not enough clearance gap is available because of the contact between the opposing division surfaces 111c of the adjacent tread molds 111 at the time of tire molding. In such cases, a groove k1 extending along the direction of extension of the division surface 111c from the opening 137b may be provided on the division surface 111c as indicated by the dotted line in FIG. 11. Or a not-shown groove heading toward the back surface 111b may be provided to discharge air.

FIG. 12 is an enlarged perspective view of an air vent hole 115 penetrating from the molding surface 111a to the attaching end surface 118a. As shown in the illustration, the air vent hole 115 extends from the molding surface 111a to the attaching end surface 118a of the tread mold 111. The slit 138 constituting the air vent hole 115 first extends in a straight line for a certain length from the molding surface 111a side toward the back surface 111b side and then changes the direction of extension in a crooked manner, for instance, in a depth position within the thickness between the molding surface 111a and the back surface 111b before opening in the attaching end surface 118a. The slit 137 as shown in the illustration is, for instance, formed with the same dimension for the length L138a of the opening 138a on the molding surface 111a side and the length L138b of the opening 138b on the attaching end surface 118a side such that the cross-sectional shape remains unchanged in the depth direction. Also, the width W138a of the slit 138 on the molding surface 111a side and the width W138b thereof on the back surface 111b side are, for instance, set in a range of 0.001 mm or more and 0.4 mm or less, respectively. It is to be noted that the slit 138 may be formed with the cross-sectional area perpendicular to the depth direction varying in the section from the opening 138a on the molding surface 111a side to the opening 138b on the attaching end surface 118a side as long as the width W138a and the width W138b are within the above-mentioned range.

In the foregoing embodiment, a description has been given of the width W of the slit constituting each air vent hole 115 as being in a range of larger than 0 mm and smaller than 0.5 mm. However, more preferably, it should be set in a range of larger than 0 mm and smaller than 0.09 mm. And even more preferably, it should be set in a range of larger than 0 mm and smaller than 0.06 mm. By doing so, the entry of rubber into the air vent hole 115 can be prevented reliably while ensuring the flow of air during tire molding.

The width W of the slit constituting each air vent hole 115 is thus set in a range of larger than 0 mm and smaller than 0.5 mm. Then the spew resulting on the tire surface will be larger than 0 mm and smaller than 0.5 mm in thickness and larger than 0 mm and smaller than 7.5 mm in height along the tire surface before it is subjected to a removal process after cure-molding. This will render the process of removing spews unnecessary. It is to be noted that the spew formed is in a flat plate shape resulting from a single slit of an air vent hole in this embodiment. Hence, the spew height meant herein refers to an average value of the dimension from the tire surface to the spew top, which varies in the lengthwise direction of spew along the tire surface.

Also, the width W of the slit may be set in a range of larger than 0 mm and smaller than 0.09 mm. Then the spew resulting on the tire surface will be smaller than 0.09 mm in thickness and larger than 0 mm and smaller than 2.0 mm in height along the tire surface before it is subjected to a removal process. This can render the process of removing spews unnecessary.

Further, the width W of the slit may be set in a range of larger than 0 mm and smaller than 0.06 mm. Then the spew resulting on the tire surface will be smaller than 0.06 mm in thickness and larger than 0 mm and smaller than 0.5 mm in height along the tire surface before it is subjected to a removal process after cure-molding. This can render the process of removing spews unnecessary.

It is to be noted that in the foregoing embodiment, a description has been given of air vent holes 115 provided in the tread mold 111. However, the slit-shaped air vent holes 115 can be provided in the side molds 109 as well. That is, the molding surfaces of the side molds 109 for molding the sides of the tire T have emblems of the tire and molding portions for molding rim protectors, etc., formed thereon. Therefore, slit-shaped air vent holes 115 along these molding portions may be formed to penetrate the side molds 109 from the molding surface 109a to the back surface 109b. Also, back surface grooves along the circumferential direction of the tire may be provided on the back surfaces 109b of the side molds 109 in positions corresponding to the openings of the air vent holes 115 therein. Then the air from the molding surface 109a side can move through the air vent holes 115 and the back surface grooves and can be discharged outside by way of not-shown holes or grooves provided in the base boards 108 and communicating with the exterior.

As described above, according to the present invention, the basic shape of the air vent holes 115 comprises slits. Accordingly, the entry of rubber into the air vent holes 115 during tire molding can be prevented while maintaining an adequate flow rate of air. Also, back surface grooves are provided on the back surface 111b of the tread mold 111 to extend between the molds in the circumferential direction of the tire. And air vent holes 115 are formed such that the openings 115b on the back surface 111b side of the air vent holes 115 communicate with the back surface grooves. By doing so, the air can be discharged reliably outside while maintaining the flow rate of air flowing from the molding surface side to the back surface side during the curing process.

The side molds 109 and the tread mold 111 of the present embodiment are manufactured by an additive manufacturing process of sintering metal powder in layers, which is one of rapid prototyping technologies. In the additive manufacturing process, the model data of a mold designed by CAD, or computer aided design, is sliced into a plurality of partial shape data (hereinafter referred to as "slice data") by dividing the data into partial shapes of layers of uniform thickness. Then the metal particles deposited to the thickness of the partial shape are irradiated with a laser according to the slice data. And the layer of metal particles sintered by laser irradiation is stacked layer by layer to manufacture a 3D mold. Note that the slice data may include information for not irradiating laser to parts which will become slit-shaped air vent holes 115 and back surface grooves, for instance.

The above-mentioned plurality of air vent holes 115 and back surface grooves 120A to 120H are set in the model data of the mold at the time of CAD design in advance. And they are formed as part of the mold together with the molding portions thereon in the process of mold fabrication by the additive manufacturing process.

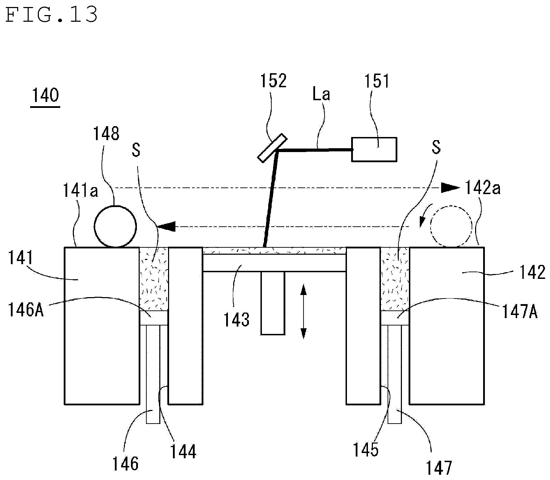

FIG. 13 illustrates an embodiment of an additive manufacturing apparatus 140. As shown in the illustration, the additive manufacturing apparatus 140 is provided with a pair of left and right stages 141 and 142 spaced apart from each other by a predetermined distance and a work table 143 so disposed as to be readily elevated or lowered between the left and right stages 141 and 142. The left and right stages 141 and 142 are set to the same height such that their respective upper surfaces 141a and 142a reside in the same plane. The stages 141 and 142 respectively have hollow cylinders 144 and 145 extending vertically. The cylinders 144 and 145 open in the upper surfaces 141a and 142a of the stages 141 and 142, respectively. Provided inside the cylinders 144 and 145 are feeders 146 and 147 having pistons 146A and 147A slidable along the inner peripheries thereof. The feeders 146 and 147 rise and lower along the direction of axes of the cylinders 144 and 145 driven by a not-shown drive mechanism operating according to the signals outputted from a not-shown forming control unit. Filled on the pistons 146A and 147A up to the upper surfaces of the stages 141 and 142 is metal powder S, which is the base material of the mold.

Located on the upper surfaces 141a and 142a of the stages 141 and 142 is a roller 148 which moves along the upper surfaces 141a and 142a. The roller 148, driven by a not-shown drive mechanism, moves between the left and right stages 141 and 142 with the outer periphery thereof rolling on the upper surfaces 141a and 142a of the left and right stages 141 and 142. Disposed above the work table 143 are a laser gun side mold 103 for irradiating the metal powder S with a laser and an irradiation mirror 152 for reflecting laser La generated from the laser gun side mold 103. The irradiation mirror 152 moves to a predetermined position, driven by a not-shown drive means, according to the control signal outputted from a not-shown forming control unit. The laser La reflected by the irradiation mirror 152 is cast to the metal powder S deposited on the work table 143 to form a sintered layer of a predetermined shape constituting a part of the tread mold 111. The sintered layers like this are stacked layer by layer to manufacture the tread mold 111. Also, the side molds 109 are manufactured in the same way.

In order to manufacture the mold of the present invention, the plurality of slit-shaped air vent holes 115, which serve as the air discharge means for discharging air on the molding surface 111a side to the back surface 111b side, are formed integrally in the manufacture of the mold by an additive manufacturing process. This renders the traditional finishing processing steps unnecessary. That is, in the forming of the side molds 109 and the tread molds 111 by the additive manufacturing process, the laser irradiation is not applied to the portions of the powder layers that would become the slits and the back grooves. The slit-shaped air holes of the air vent holes 115 and the back surface grooves can be formed by this maneuver only. Accordingly, the side molds 109 and the tread mold 111 can be manufactured in a shorter time. For example, a total of about 1000 air vent holes 115 have to be provided in the upper and lower side molds 109 and the plurality of tread molds 111 which are placed to enclose the outer periphery Ta of the tire T. Hence, compared with the traditional drilling work which may take about 30 to 50 seconds to form one vent hole, the additive manufacturing process achieves a shortening of time by 500 to 830 minutes in total.

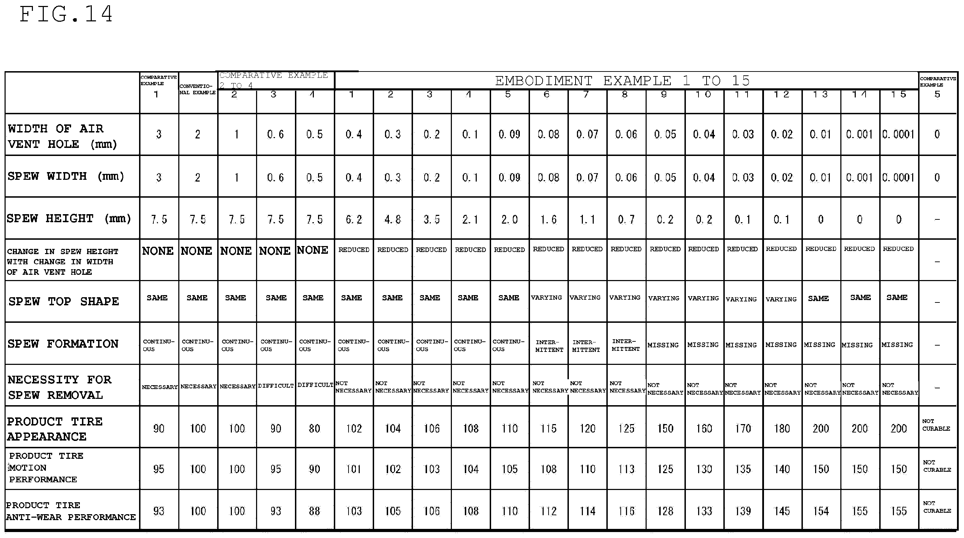

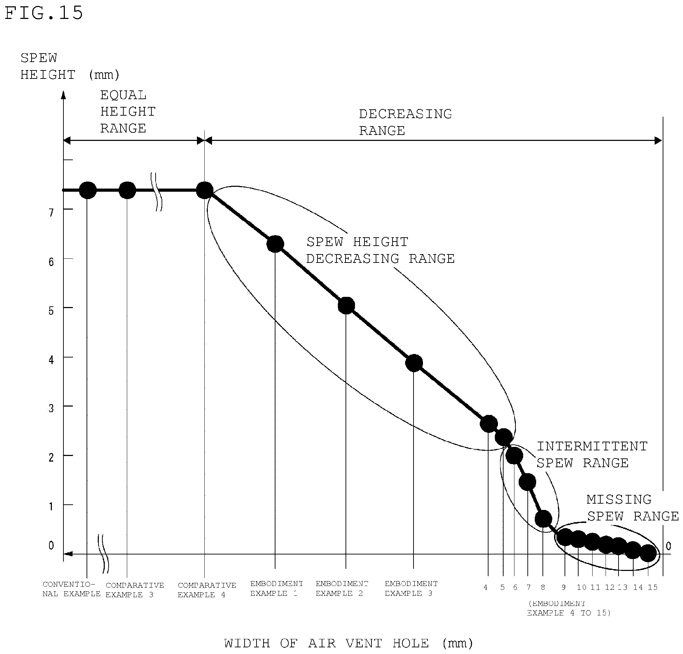

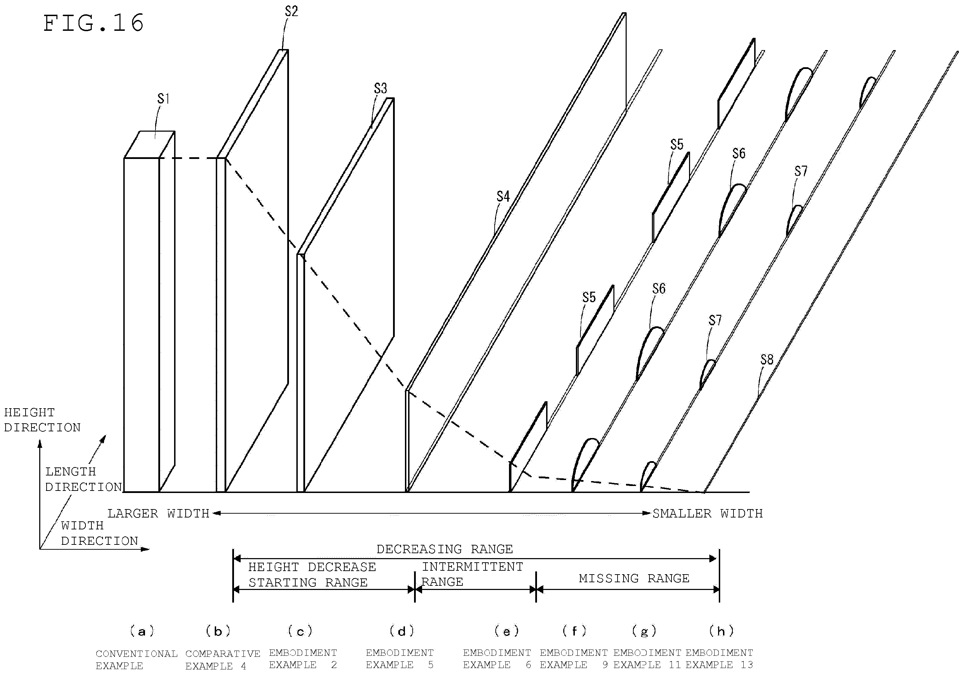

The table of FIG. 14 summarizes the results of evaluation of various performances made of the spews formed on tire surfaces and tires. For the evaluation, test tires for Conventional Example, Comparative Examples 1 to 5, and Embodiment Examples 1 to 15 were produced experimentally with the width of the air vent holes formed in the molds changed in various manners. Fig. 15 is a graph showing a relationship between the different widths of air vent holes and the spew height based on the table of FIG. 14. FIG. 16 illustrates the examples of spew formation corresponding to the respective examples of FIG. 14. It is to be noted that S1 to S7 in the illustration denote their respective spews. Also, the spews S5 to S7 represent schematically the shapes of spews formed by an air vent hole with a smaller width and the length at which the spew S4 as shown in (d) of FIG. 16 was formed.

In preparing the molds for producing the test tires, the air vent holes in Comparative Examples 1 to 5 and Embodiment Examples 1 to 15 were formed such that their air discharge performance becomes equal to that of the Conventional Example. Also, fixed conditions were applied to the cure-molding in the test tire production.

The spew width in the table of FIG. 14 is the actually measured value of the thickness of the spew formed on the tire surface. The spew height is the average value of the dimension from the tire surface to the top in the normal direction of the spew formed by each air vent hole. This is because the single-slit-shaped air vent hole of Comparative Examples 2 to 4 and Embodiment Examples 1 to 15 forms a plate-like spew on the tire surface. The spew top shape means the variation in height from the tire surface to the top of the spew formed by an air vent hole along its length direction. It was, for instance, evaluated as "same" for no variation in height and as "varying" for variation in height. Spew formation represents the state of formation of a spew formed by an air vent hole along its length direction. It was evaluated as "continuous" for a continuous formation within the length of an air vent hole and as "intermittent" for an intermittent formation. Also, it was evaluated as "missing" when no formation of spew was observed. Necessity for spew removal represents the decision on the necessity for spew removal as decided with the spews on conventional tires. It was evaluated as "necessary" when removal was considered necessary, as "not necessary" when it was not necessary, and "difficult" when it was necessary but difficult. The product tire appearance, the product tire motion performance, and the product tire anti-wear performance were evaluated by indexation in comparison with the tire appearance, motion performance, and anti-wear performance of conventional tires after spew removal as 100, respectively. It is to be noted that the tire appearance, motion performance, and anti-wear performance after spew removal were evaluated for Comparative Examples 1 to 5, and those without spew removal for Embodiment Examples 1 to 15.

As shown in the table of FIG. 14 and the graph of FIG. 15, it was found that the width of spews formed on the tire surface of Conventional Example, Comparative Examples 1 to 5, and Embodiment Examples 1 to 15 is formed in the same dimension as the width of air vent holes.

Also, it was found that as indicated by Embodiment Examples 1 to 15, the spew height decreases as the width of the air vent hole is made smaller from 0.5 mm. That is, with Conventional Example and Comparative Examples 1 to 4, no change in the height of spew formed on the tire surface was seen at the width of the air vent hole of 0.5 mm or more as indicated by S1 and S2 of (a) and (b) of FIG. 16. However, with the width W made gradually smaller than 0.5 mm, it was found that the spew height gets lower as indicated by S4 to S7 of (c) to (g) of FIG. 16. Thus, the process of spew removal was found to be unnecessary.

Also, as shown with Embodiment Examples 6 to 15, it was found that the spew formed by an air vent hole is formed intermittently in the length direction along the tire surface as the width of the air vent hole is made smaller from 0.09 mm, as indicated by S5 to S7 of (e), (f), and (g) of FIG. 16. As indicated by the spew top shape and the spew formation, the variation in height of spew top shape in the length direction of the spew was found to eventually lead to an intermittent formation. Also, as indicated by Embodiment Examples 9 to 15, with the width of the air vent hole made smaller than 0.06 mm, the spews formed intermittently as S7 of (g) of FIG. 16 will begin to be missing and finally be lost completely. In other words, no spews will be formed on the tire surface. In this case, only an air vent hole mark as S8 of (h) of FIG. 16 is left on the surface (spew height: 0 mm). That is, the tire surface is flat except for a visible mark left when it was pressed against the opening edges of the air vent hole. Especially as seen with Embodiment Examples 13 to 15, the spews would seldom be formed when the width of the air vent hole was set to be larger than 0 mm and smaller than 0.01 mm. It is to be noted that with Embodiment Examples 9 to 12, any spew height was not observed, but observation was not made of all the air vent holes. Therefore, the spew formation was evaluated as "missing", which means practically no occurrence of spew.

Also, Embodiment Examples 1 to 15 showed superior appearance, motion performance, and anti-wear performance to those of any of Conventional Example and Comparative Examples 1 to 4. Especially with Embodiment Examples 9 to 15, the appearance, motion performance, and anti-wear performance showed marked improvements as the width of the air vent hole was made smaller toward 0 mm.

It should be noted that when the width of the air vent hole was set to 0 mm as in Comparative Example 5, no cure-molding could be performed.

As have been described so far, manufacturing of tires by the use of the mold according to the present embodiments for molding green tires can eliminate adverse effects of spews on the initial performance, appearance, motion performance, and anti-wear performance of the tire. As a result, tires featuring excellent initial performance, appearance, motion performance, and anti-wear performance can be formed.

It is to be noted that in the foregoing embodiment, a description has been given of the air vent holes 115 as being provided in parts avoiding the rib groove molding portions 113A and lug groove molding portions 113B constituting the groove molding portions 113. However, the air vent holes 115 may be provided in the groove molding portions 113. That is, although one end of the air vent holes 115 has been described as opening in the contact surface molding portions 112 on the molding surface 111a, one end thereof may open in the top surface or the side surface of the rib groove molding portions 113A or the lug groove molding portions 113B. In such a case, the air vent holes 115 may be provided such that the opening of the air vent holes 115 extends in the direction of extension of the rib groove molding portions 113A or the lug groove molding portions 113B. More preferably, the opening of the air vent holes 115 may be so provided as to extend along the corner between the top surface and the side surface of the groove molding portions 113 or the corner between the contact surface molding portion 112 and the side surface of the groove molding portion 113. By doing so, the air trapped between the molding surface 111a and the outer periphery of the tire T can be discharged efficiently, and the formation of spews on the tire surface after curing can be inhibited.

Also, as another example of implementation, the air vent hole 115 may be formed such that one end thereof extending from the back surface 111b is bifurcated to open in both of one side surface and the other side surface of the groove molding portion 113. That is, the air vent hole 115 is so formed as to have a slit-shaped hole penetrating the groove molding portion 113 from one side surface to the other side surface thereof and another slit-shaped hole with one end thereof opening in the above-mentioned hole and the other end thereof opening in the back surface groove 120. In such a case, it is desirable that the sum of the area of the opening in the one side surface of the groove molding portion 113 and the area of the opening in the other side surface is equal to the cross-sectional area of the hole leading to the back surface 111b and the area of the opening in the back surface 111b.

As described above, manufacturing of tires by the use of the mold according to this embodiment for molding green tires can suppress adverse effects of spews on the initial performance, appearance, motion performance, and anti-wear performance of the tire. As a result, tires featuring excellent initial performance, appearance, motion performance, and anti-wear performance can be formed.

Also, as another example of implementation, the air vent hole 15 may be formed such that one end thereof extending from the back surface 11b is bifurcated to open in both of one side surface and the other side surface of the groove molding portion 13. That is, the air vent hole 15 is so formed as to have a slit-shaped hole penetrating the groove molding portion 13 from one side surface to the other side surface thereof and another slit-shaped hole with one end thereof opening in the above-mentioned hole and the other end thereof opening in the back surface groove 20. In such a case, it is desirable that the sum of the area of the opening in the one side surface of the groove molding portion 13 and the area of the opening in the other side surface is equal to the cross-sectional area of the hole leading to the back surface 11b and the area of the opening in the back surface 11b.

Hereinbelow, a description is given of a tire curing apparatus provided with tire curing molds according to other embodiments of the present invention with reference to the drawings.

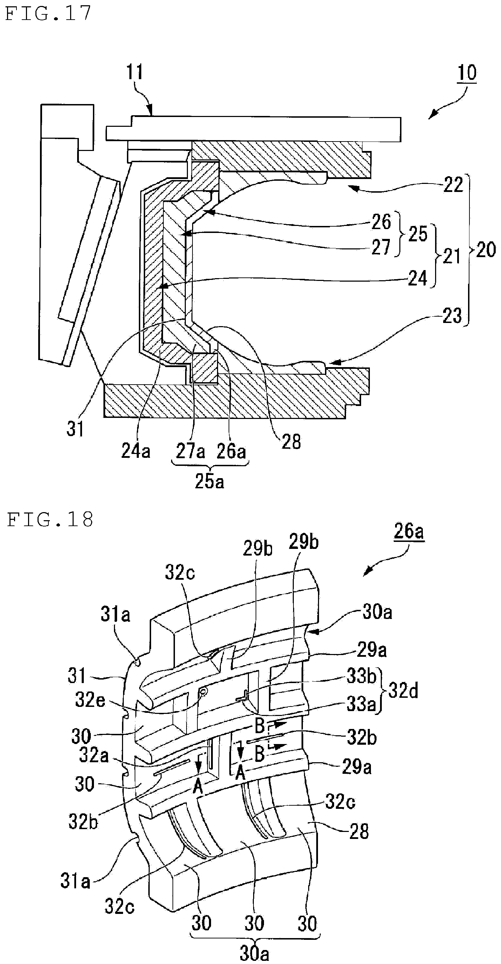

As shown in FIG. 17, the tire curing apparatus 10 includes a container 11 and a tire curing mold (hereinafter referred to as "mold") 20 mounted on the container 11. The tire curing apparatus 10 forms a tire (cured tire) by heating and curing under pressure a green tire placed inside the mold 20.

The mold 20 comprises sector molds 21, an upper side mold 22, and a lower side mold 23. The sector molds 21, placed on the tread region of the green tire, mainly mold the tread region, whereas the upper side mold 22 and the lower side mold 23, placed on the sidewalls of the green tire, mainly mold the sidewalls, respectively.

In this setup, the sector molds 21 are arranged in a cylindrical shape, and the upper side mold 22 and the lower side mold 23 are both shaped annularly. And the central axes of the sector molds 21, the upper side mold 22, and the lower side mold 23 are all located on a common axis. Hereinafter this common axis will be referred to as the mold axis (axis of pattern molding members) . And the direction perpendicular to the mold axis will be referred to as the radial direction (radial direction of pattern molding members), and the direction around the mold axis as the circumferential direction (circumferential direction of pattern molding members).

The sector molds 1 have each a holder 24 mounted on the container 11 and a tread ring 25 held by the holder 24. The holder 24 and the tread ring 25 are both formed in a cylindrical shape coaxially around the mold axis. The tread ring 25 has a pattern plate (pattern molding member) 26 positioned radially inside and an attachment 27 positioned radially outside. The pattern plate 26 forms a tread pattern on the surface of the tread region of the green tire. The attachment 27 attaches the tread ring 25 to the holder 24. The thickness of the pattern plate 26, which is the size thereof in the radial direction, is thinner than that of the attachment 27.

It is to be noted here that the holder 24 and the tread ring 25 are each divided into a plurality of divisions circumferentially. Of the holder 24 and tread ring 25, the tread ring 25 has the pattern plate 26 and attachment 27 circumferentially divided at equal intervals. And the ring divisions 25a, which are the circumferential divisions of the tread ring 25, are each a combination of a first segment (segment) 26a, which is one of the circumferential divisions of the pattern plate 26 and a second segment 27a, which is one of the circumferential divisions of the attachment 27.

It is to be noted that the holder divisions 24a, which are the circumferential divisions of the holder 24, are, for instance, circumferentially of a size equivalent to that of the ring divisions 25a. And thus a holder division 24a may hold a ring division 25a. Further, the holder division 24a may, for instance, be formed circumferentially larger than the ring division 25a such that one holder division 24a may hold a plurality of ring divisions 25a.

As shown in FIG. 18, the first segment 26a has rib portions 29a and 29b and recessed portions 30 on the molding surface 28 facing the radially inner side thereof. The rib portions 29a and 29b, which project radially inward from the molding surface 28, mold grooves in the tread pattern. The rib portions 29a and 29b are formed rectangular in radial cross sections, respectively.

The rib portions 29a and 29b are longitudinal rib portions 29a extending circumferentially and lateral rib portions 29b extending in the mold axis direction. A plurality of longitudinal rib portions 29a are provided at intervals in the mold axis direction. A plurality of lateral rib portions 29b are provided at intervals in the circumferential direction, and those, of the plurality of lateral rib portions 29b, located between the neighboring longitudinal rib portions 29a in the mold axis direction, connect the longitudinal rib portions 29a with each other.

The recessed portions 30, which are recessed radially outward in relation to the rib portions 29a and 29b (tops of the rib portions 29a and 29b), mold the land portions in the tread pattern. A plurality of recessed portions 30 are provided in parts surrounded by the rib portions 29a and 29b on the molding surface 28. The plurality of recessed portions 30 arranged side by side in the circumferential direction constitute a series of recessed portions 30a, and a plurality of the series of recessed portions 30a are provided in the mold axis direction. The bottom surface (slit forming surface) of the recessed portion 30, as seen from front, may be square or rectangular in shape in the example of the illustration.

Circumferential grooves 31a extending circumferentially and opening in each circumferential end of the first segment 26a are formed on the back surface 31 facing radially outward thereof. A plurality of circumferential grooves 31a are provided at intervals in the mold axis direction. The circumferential grooves 31a are located on the back surface 31 in positions avoiding the parts radially outside of the longitudinal rib portions 29a such that they are dislocated in the mold axis direction from the longitudinal rib portions 29a. The circumferential grooves 31a, which reach their respective circumferential ends, send the air led out from inside the mold 20 therethrough and discharge it at the respective circumferential ends of the first segment 26a.

And in this embodiment, slits 32a to 32e functioning as air vent holes for discharging air trapped between the green tire and the molding surface 28 are provided in the top surfaces of the rib portions 29a and 29b, the side surfaces of the rib portions 29a and 29b, or the bottom surfaces of the recessed portions 30. And the slits 32a to 32e are located on the inside of the periphery of the surfaces where they are disposed (hereinafter referred to as "slit forming surfaces") . The "inside of the periphery" meant here refers to the inside of the outline of the slit forming surface. That is, the slits 32a to 32e are each formed within the slit forming surface, with the ends thereof terminating therewithin without traversing it.

The slits 32a to 32e include side surface slits 32a provided in the side surfaces of the rib portions 29a and 29b and bottom surface slits 32b to 32e provided in the bottom surfaces of the recessed portions 30. And there are no slits 32a to 32e provided in the top surfaces of the rib portions 29a and 29b.

The side surface slits 32a are each formed in an I shape linearly extending within a side surface of the rib portions 29a and 29b. It is to be noted that the slit width of the side surface slits 32a, which is the size thereof perpendicular to the direction of extension thereof within the side surface (slit forming surface) of the rib portions 29a and 29b, may be, for instance, 0.01 mm or larger and 0.4 mm or smaller, and more preferably, 0.01 mm or larger and 0.2 mm or smaller.

The side surface slits 32a are each provided in the lower part of the side surfaces of the rib portions 29a and 29b connecting to the bottom surface of the recessed portions 30. The side surface slits 32a are provided in the lateral rib portions 29b, of the plurality of the rib portions 29a and 29b, extending linearly in the mold axis direction.

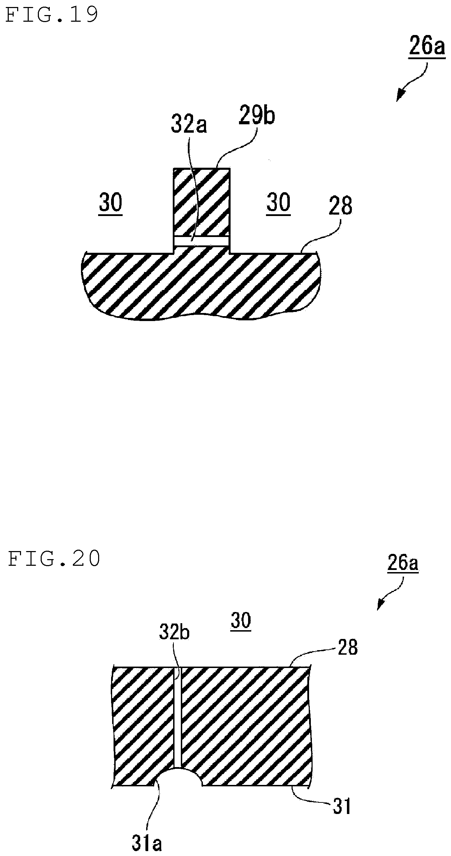

As shown in FIG. 19, the side surface slits 32a each penetrate the rib portions 29a and 29b and open in the respective side surfaces thereof. In the example of the illustration, the side surface slit 32a penetrates the lateral rib portion 29b in the circumferential direction and opens in the respective side surfaces thereof facing in the circumferential direction. The side surface slit 32a is formed in an I shape, as viewed cross-sectionally, and extending linearly.

As shown in FIG. 18, the bottom surface slits 32b to 32e include first bottom surface slits 32b, second bottom surface slits 32c, third bottom surface slits 32d, and fourth bottom surface slits 32e. And the slit width of these bottom surface slits 32b to 32e may be, for instance, 0.01 mm or larger and 0.4 mm or smaller, and more preferably, 0.01 mm or larger and 0.2 mm or smaller.

The first bottom surface slit 32b is formed in an I shape linearly extending within the bottom surface of the recessed portion 30. The first bottom surface slit 32b extends in the circumferential direction and is located in the middle part of the bottom surface of the recessed portion 30. The first bottom surface slit 32b is provided in each of the bottom surfaces of a pair of recessed portions 30 circumferentially sandwiching the above-mentioned lateral rib portion 29b provided with the side surface slit 32a.

As shown in FIG. 20, the first bottom surface slit 32b penetrates the first segment 26a in the radial direction and opens in the back surface 31 thereof, in a circumferential groove 31a in this embodiment. The first bottom surface slit 32b is formed in an I shape, as viewed cross-sectionally, and extends linearly. The first bottom surface slit 32b is formed such that the slit width is constant for the whole length thereof in the depth direction, or the radial direction, and the cross-sectional area of the passage remains unchanged for the whole length thereof in the depth direction.

It is to be noted that the second bottom surface slits 32c, the third bottom surface slits 32d, and the fourth bottom surface slits 32e as shown in FIG. 18 also penetrate the first segment 26a in the radial direction and open in the back surface 31 thereof, as with the first bottom surface slits 32b.

The second bottom surface slits 32c are each formed in an I shape linearly extending within the bottom surface of the recessed portions 30. The second bottom surface slits 32c each extend in the mold axis direction and are located adjacent to the lateral rib portion 29b and extend therealong. The second bottom surface slits 32c are provided in the bottom surfaces of the recessed portions 30 constituting the recessed portion series 30a located on the respective outer sides in the mold axis direction, of a plurality of recessed portion series 30a arranged in the mold axis direction.

The third bottom surface slits 32d and the fourth bottom surface slits 32e are both located in a corner of the bottom surface of the recessed portions 30. The third bottom surface slits 32d are each formed in an L shape in the bottom surface of the recessed portion 30, whereas the fourth bottom surface slits 32d are each formed in an O shape in the bottom surface thereof. In the example of the illustration, the third bottom surface slit 32d and the fourth bottom surface slit 32e are located in the bottom surface of the same recessed portion 30 in the corners diagonal to each other of the plurality of corners of the bottom surface, respectively.

It is to be noted that the third bottom surface slit 32d consists of a circumferential slit 33a extending linearly in the circumferential direction and an axial slit 33b extending linearly in the mold axis direction. And a circumferential end of the circumferential slit 33a and an axial end of the axial slit 33b are connected to each other. The circumferential slit 33a is disposed adjacent to the longitudinal rib portion 29a, and the axial slit 33b adjacent to the lateral rib portion 29b. And the connection between the circumferential slit 33a and the axial slit 33b is disposed adjacent to the connection between the longitudinal rib portion 29a and the lateral rib portion 29b.

When a green tire is cured under heat and pressure inside the mold 20 of the above-described tire curing apparatus 10, the air trapped between the green tire and the molding surface 28 is discharged through the slits 32a to 32e. This air may, for instance, be discharged outside after passing through the bottom surface slits 32b to 32e from within the mold 20 and reaching the back surface 31 of the first segment 26a. Or the air may first be led out to other recessed portions 30 through the side surface slits 32a from within the recessed portion 30 of the mold 20 and then discharged outside through the bottom surface slits 32b to 32e formed in the bottom surfaces of the other recessed portions 30 through the side slit 32a.

Note that the first segment 26a is formed by a powder sintering method (additive manufacturing process, rapid prototyping technology) in which powder layers consisting of a powder material, such as a metallic or ceramic material, are sintered by laser light and stacked on top of each other. In this powder sintering method, the powder layers sintered by heating under laser irradiation are stacked sequentially to form the first segment 26a.

A description is given of an example of manufacturing a first segment 26a by the powder sintering method. A powder layer of the above-mentioned powder material is formed within a not-shown chamber. Then the powder layer is sintered through heating by a not-shown laser unit (local heating means). At this time, a not-shown control unit controls the light path of laser irradiated from the laser unit according to the design drawing or the like of the first segment 26a or the tire. Thus the parts of the powder layer which constitute a part of the first segment 26a are sintered with the laser light scanning them.

Then, a process of stacking another powder layer on top of the sintered powder layer and sintering the new powder layer by heating is repeated to eventually form a laminated sintered body which is to become the first segment 26a.

In this powder sintering method, the slits 32a to 32e of the first segment 26a, which are to be formed within the slit forming surfaces, can be formed simply by not sintering the parts of the powder layer which are to become the slits 32a to 32e (hereinafter referred to as "slit-to-be parts") . That is, in the above-described example of manufacturing, simply not allowing the scanning of the slit-to-be parts by the laser will form the first segment 26a quite readily.

Since the thickness of the pattern plate 26 is thinner than that of the attachment 27, it should be noted that the formation of the first segment 26a by a powder sintering method like this will ensure the production efficiency of the tread ring 25 as a whole. In other words, the second segment 27a can be formed in a simpler shape than the first segment 26a. Therefore, it is possible that the second segment 27a is formed with higher accuracy by a method other than the powder sintering method, by casting, for instance.

As described above, with the mold 20 according to the present embodiment, the slits 32a to 32e are located within the peripheries of the slit forming surfaces, respectively. As a result, the slits 32a to 32e can be formed shorter within the slit forming surfaces than the case with the conventional tire curing mold where the slits are traversing the slit forming surfaces. This will make the spews not only thin and long along the slits but also shorter, thus reducing the adverse effects of the spews on the initial performance and appearance of the tire.

Also, as mentioned above, the slits 32a to 32e are located within the peripheries of the slit forming surfaces. Hence, the slits 32a to 32e can be formed freely and accurately within the slit forming surfaces without relying on the surfaces other than the slit forming surfaces. This means that the position, shape, size, number, etc., of the slits 32a to 32e can be adjusted in various manners within the slit forming surfaces. For example, the slits 32a to 32e may be formed such that the air from parts within the mold 20 which defies easy removal can be discharged effectively. Or the slits 32a to 32e may be formed such that the resulting spews are no longer conspicuous on the tread surface. This will further reduce the detrimental effects of spews on the initial performance and appearance of the tire.

Also, the first segment 26a is formed by a powder sintering method. As a result, the slits 32a to 32e, located within the peripheries of the slit forming surfaces of the first segment 26a, can be formed accurately without coming under undue processing constraints. This will ensure design freedom of the slits 32a to 32e, thus reliably eliminating the adverse effects of spews on the initial performance and appearance of the tire.

Also, as mentioned above, the slits 32a to 32e can be formed accurately within the slit forming surfaces. Accordingly, the slender slits 32a to 32e can be formed with high accuracy within the slit forming surfaces. As a result, when the air trapped inside the mold 20 is discharged through the slits 32a to 32e, portions of rubber forming the green tire is prevented from flowing into the slits 32a to 32e together with the air. This will reduce the amount of stray rubber flowing into the slits 32a to 32e, making it difficult for spews to be formed on the surface of the tread region. Also, with the amount of stray rubber reduced, it is possible to prevent the stray rubber from remaining inside the slits 32a to 32e when the tire is stripped from the mold 20. This can, for example, prevent any faulty air discharge during the subsequent curing process.

Also, the slit width of the slits 32a to 32e, which is set to be 0. 01 mm or more and 0.4 mm or less, reliably eliminates the adverse effects of spews on the initial performance and appearance of the tire. In other words, the slit width of less than 0.01 mm may hamper air discharge from within the mold 20. On the other hand, the slit width of larger than 0.4 mm may leave spew bases on the surface of the tread region, which may significantly affect the initial performance and appearance of the tire.

Also, the bottom surface slits 32b to 32e open in the back surface 31 of the first segment 26a. Thus the air trapped in the mold 20 can be discharged effectively by leading it toward the back surface 31 of the first segment 26a.

Furthermore, the first bottom surface slits 32b open in the circumferential grooves 31a. Thus the air discharged to the back surface 31 of the first segment 26a can be led to the circumferential ends of the first segment 26a. As a result, the air can be discharged more effectively.

And the tire is formed by curing a green tire using the mold 20 as described so far. In this tire manufacturing method, it is possible to prevent the detrimental effects of spews on the initial performance and appearance of the tire. Thus, a tire featuring superior initial performance and appearance can be manufactured.

In the foregoing embodiment, the side surface slits 32a penetrate the rib portions 29a and 29b and open in the respective side surfaces with the rib portions 29a and 29b in between. But this is not a limitation of the present invention. For example, the side surface slits may penetrate the first segment and open in the back surface thereof.

Also, it is to be understood that the present invention is not limited to the slits 32a to 32e as described in the foregoing embodiments.

For example, the slits in the slit forming surfaces as seen from front may be I-shaped, T-shaped, C-shaped, J-shaped, O-shaped, L-shaped, or V-shaped. Or part or whole of these slits may be shaped in a combination of these shapes.

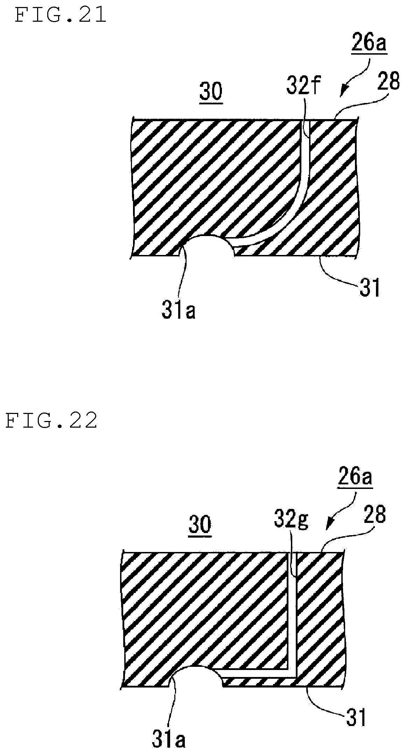

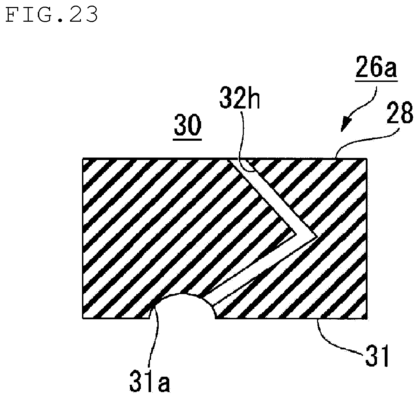

Moreover, as shown in the first to third variations of FIG. 21 to FIG. 23, the slits 32f to 32h in the segment 26a of the mold may be curved or crooked in the cross-sectional view along the radial direction. For example, as with the slit 32f shown in FIG. 21, the slit may be curved in a J-shape in the cross-sectional view. Or as with the slit 32g shown in FIG. 22, the slit may be crooked in an L-shape in the cross-sectional view. Or as with the slit 32h shown in FIG. 23, the slit may be crooked in a V-shape in the cross-sectional view. Further, the slit in the cross-sectional view may be shaped partly or wholly in a combination of the J-shape, L-shape, and V-shape.

In the last case, the slits 32f to 32h are curved or crooked in the cross-sectional view. Therefore, the slits 32f to 32h are capable of holding more stray rubber than with the slits formed straight in the cross-sectional view, for instance. This will prevent the stray rubber from passing through the slits 32f to 32h and reaching the back surface 31 of the first segment 26a.

A top surface slit may be provided as the slit in the top surface of the rib portion in the present invention. Also, other arrangements may be employed as appropriate in the present invention by providing a slit in a position within the peripheries of the surface in at least one of the top surface of the rib portion, the side surface of the rib portion, and the bottom surface of the recessed portion. Furthermore, it is possible that no circumferential grooves 31a are provided in the present invention.

Also, according to the foregoing embodiment, the tread ring 25 consists of an attachment 27 and a pattern plate 26. But this is not a limitation of this invention. For example, the tread ring may be integrally formed in a ring shape without the division into attachment and pattern plate . In such a case, the tread ring itself can assume the pattern forming member of the invention.

Further, according to the foregoing embodiment, the sector mold 21 consists of a holder 24 and a tread ring 25. But this is not a limitation of this invention. For example, the sector mold may be integrally formed in a ring shape without the division into holder and tread ring. In such a case, the sector mold itself can assume the pattern forming member of the invention.

In the foregoing embodiments, descriptions have been given of the air vent holes, using the tire mold employed for cure-molding tires. However, the molds provided with air vent holes as described in the foregoing embodiments may be employed as molds for molding other rubber articles or resin products. Then products featuring superior appearance can be manufactured.

The technical scope of this invention is not to be considered as limited to those embodiments. It will be evident to those skilled in the art that various modifications and changes may be made thereto without departing from the scope of the claims.

### Description of Reference Numerals

- 20: tire curing mold
- 26: pattern plate (pattern forming member)
- 26a: first segment (segment)
- 28: molding surface
- 29a, 29b: rib portion
- 30: recessed portion
- 31: back surface
- 31a: circumferential groove
- 32a to 32h: slit portion
- 109: side mold
- 111: tread mold
- 111a: molding surface
- 111b: back surface
- 115: air vent hole
- 120A to 120H: back surface groove
- 131 135: slit
- T: tire

## Claims

1. A mold (20) having a molding surface (111a) for molding an uncured rubber article, including:
air vent holes (115) therein each penetrating from the molding surface (111a) to a back surface (111b) thereof wherein a width of each of the air vent holes (115) opening in the molding surface (111a) is larger than 0 mm and smaller than 0.5 mm,
**characterised in that** each air vent hole (115) comprises a slit (131) extending along a rib groove molding portion (113A) formed in the molding surface (111a) and a slit (132) extending along a lug groove molding portion (113B) formed in the molding surface (111a) and intersecting with the slit (131) extending along the rib groove molding portion (113A).

2. The mold (20) for molding a rubber article according to claim 1, wherein the air vent holes (115) each comprise slits (115) formed by a single hole or slits formed by a plurality of holes arranged in a dotted-line formation and wherein a shape of the slit openings in the molding surface (111a) is a shape whose end opening in the molding surface (111a) terminates in the molding surface (111a), or an annular shape, or a shape of combination thereof.

3. The mold (20) for molding a rubber article according to claim 1 or claim 2, wherein the air vent holes (115) in cross section perpendicular to a depth direction of the hole (115) penetrating from the molding surface (111a) to the back surface (111b) are each linear, curved, crooked, or any combination thereof in shape.

4. The mold (20) for molding a rubber article according to any of claims 1 to 3, wherein the air vent holes (115) extend from the molding surface (111a) to the back surface (111b) in a shape linear, curved, crooked, or any combination thereof.

5. The mold (20) for molding a rubber article according to any of claims 1 to 4, wherein the mold (20) is a tire mold (20) for a sectional mold divided into plural numbers in a circumferential direction of the tire and wherein the mold (20) has grooves (120A to 120H) on the back surface (111b) thereof extending from a division face (111c) at a circumferential end to a division face (111c) at the other circumferential end with the air vent holes (115) opening in these grooves (120A to 120H).

6. The mold (20) for molding a rubber article according to claim 5, wherein air vent holes (115) are provided in positions other than parts of the molding surface (111a) for molding recessed portions in uncured rubber.

7. The mold (20) for molding a rubber article according to any of claims 1 to 6, wherein the mold (20) for molding a rubber article is manufactured by a rapid prototyping process.

8. A method for manufacturing a tire comprising:
forming the tire by curing a tire of uncured rubber using the mold (20) for molding a rubber article of any of claims 1 to 7.

9. A tire having:
a tire surface molded by the mold (20) for molding a rubber article according to any of claims 1 to 7, wherein spews formed by air vent holes (115) are larger than 0 mm and smaller than 0.5 mm in width and larger than 0 mm and smaller than 7.5 mm in height.

10. The tire according to claim 9, wherein the spews are each smaller than 0.09 mm in width and larger than 0 mm and smaller than 2.0 mm in height.

11. The tire according to claims 9 or claim 10, wherein the spews are each smaller than 0.06 mm in width and larger than 0 mm and 0.5 mm or smaller in height.

12. The tire according to any of claims 9 to 11, wherein each spew changes in height in a length direction along the tire surface molded by one air vent hole (115).

13. The tire according to any of claims 9 to 12, wherein each spew is formed intermittently in a length direction along the tire surface molded by one air vent hole (115).

## Patentansprüche

1. Form (20) mit einer Formoberfläche (111a) zum Formen eines unvulkanisierten Gummierzeugnisses, einschließend:
Entlüftungslöcher (115) darin, die jeweils von der Formoberfläche (111a) zu einer rückseitigen Oberfläche (111b) derselben hindurchgehen, worin eine Breite jedes der Entlüftungslöcher (115), die in der Formoberfläche (111a) münden, größer als 0 mm und kleiner als 0,5 mm ist,
**dadurch gekennzeichnet, dass** jedes Entlüftungsloch (115) umfasst: einen Schlitz (131), der sich entlang einem in der Formoberfläche (111a) ausgebildeten Rippenrillenformabschnitt (113A) erstreckt, und einen Schlitz (132), der sich entlang einem in der Formoberfläche (111a) ausgebildeten Stollenrillenformabschnitt (113B) erstreckt und sich mit dem Schlitz (131), der sich entlang dem Rippenrillenformabschnitt (113A) erstreckt, schneidet.

2. Form (20) zum Formen eines Gummierzeugnisses nach Anspruch 1, worin die Entlüftungslöcher (115) jeweils Schlitze (115) umfassen, die durch ein einzelnes Loch gebildet sind, oder Schlitze, die durch eine Vielzahl von Löchern gebildet sind, die in Form einer gestrichelten Linie angeordnet sind, und worin eine Gestalt der Schlitzmündungen in der Formoberfläche (111a) eine Gestalt ist, deren Endmündung in der Formoberfläche (111a) in der Formoberfläche (111a) ausläuft, oder eine ringförmige Gestalt oder eine Gestalt einer Kombination daraus.

3. Form (20) zum Formen eines Gummierzeugnisses nach Anspruch 1 oder Anspruch 2, worin die Entlüftungslöcher (115) im Querschnitt senkrecht zu einer Tiefenrichtung des Lochs (115), das von der Formfläche (111a) zur rückseitigen Oberfläche (111b) hindurchgeht, an Gestalt jeweils gerade, gekrümmt, schief oder jegliche Kombination daraus sind.

4. Form (20) zum Formen eines Gummierzeugnisses nach einem der Ansprüche 1 bis 3, worin die Entlüftungslöcher (115) sich von der Formoberfläche (111a) zur rückseitigen Oberfläche (111b) in einer Gestalt erstrecken, die linear, gekrümmt, schief oder jegliche Kombination daraus ist.

5. Form (20) zum Formen eines Gummierzeugnisses nach einem der Ansprüche 1 bis 4, worin die Form (20) eine Reifenform (20) für eine zusammensetzbare Form ist, die in einer Umfangsrichtung des Reifens mehrfach unterteilt ist, und worin die Form (20) auf ihrer rückseitigen Oberfläche (111b) Rillen (120A bis 120H) aufweist, die sich von einer Teilungsfläche (111c) an einem Umfangsende zu einer Teilungsfläche (111c) am anderen Umfangsende erstrecken, wobei die Entlüftungslöcher (115) in diesen Rillen (120A bis 120H) münden.

6. Form (20) zum Formen eines Gummierzeugnisses nach Anspruch 5, worin Entlüftungslöcher (115) an anderen Positionen als den Teilen der Formoberfläche (111a) zum Formen von vertieften Abschnitten in unvulkanisiertem Gummi vorgesehen sind.

7. Form (20) zum Formen eines Gummierzeugnisses nach einem der Ansprüche 1 bis 6, wobei die Form (20) zum Formen eines Gummierzeugnisses durch ein Rapid-Prototyping-Verfahren hergestellt wird.

8. Verfahren zum Herstellen eines Reifens, umfassend:
Formen des Reifens durch Vulkanisieren eines Reifens aus unvulkanisiertem Gummi unter Verwendung der Form (20) zum Formen eines Gummierzeugnisses nach einem der Ansprüche 1 bis 7.

9. Reifen mit:
einer Reifenoberfläche, die durch die Form (20) zum Formen eines Gummierzeugnisses nach einem der Ansprüche 1 bis 7 geformt ist, worin die durch Entlüftungslöcher (115) gebildeten Austriebe größer als 0 mm und kleiner als 0,5 mm in der Breite sowie größer als 0 mm und größer als 0 mm und kleiner als 7,5 mm in der Höhe sind.

10. Reifen nach Anspruch 9, worin die Austriebe jeweils kleiner als 0,09 mm in der Breite sowie größer als 0 mm und kleiner als 2,0 mm in der Höhe sind.

11. Reifen nach Anspruch 9 oder Anspruch 10, worin die Austriebe jeweils kleiner als 0,06 mm in der Breite, sowie größer als 0 mm und 0,5 mm oder kleiner in der Höhe sind.

12. Reifen nach einem der Ansprüche 9 bis 11, worin jeder Austrieb in einer Längsrichtung entlang der Reifenoberfläche seine Höhe ändert, die durch ein Entlüftungsloch (115) geformt ist.

13. Reifen nach einem der Ansprüche 9 bis 12, worin jeder Austrieb in einer Längsrichtung entlang der Reifenoberfläche, die durch ein Entlüftungsloch (115) geformt ist, unterbrochen ausgebildet ist.

## Revendications

1. Moule (20) comportant une surface de moulage (111a) pour mouler un article en caoutchouc non durci, incluant :
des trous d'évent d'aération (115) qui sont ménagés à l'intérieur et dont chacun réalise une pénétration depuis la surface de moulage (111a) jusqu'à la surface arrière (111b) afférente, dans lequel une largeur de chacun des trous d'évent d'aération (115) qui débouchent à l'intérieur de la surface de moulage (111a) est plus grande que 0 mm et plus petite que 0,5 mm ;
**caractérisé en ce que** chaque trou d'évent d'aération (115) comprend une fente (131) qui s'étend le long d'une section de moulage de rainure de nervure (113A) qui est formée dans la surface de moulage (111a) et une fente (132) qui s'étend le long d'une section de moulage de rainure de barrette (113B) qui est formée dans la surface de moulage (111a) et qui intersecte la fente (131) qui s'étend le long de la section de moulage de rainure de nervure (113A).

2. Moule (20) pour mouler un article en caoutchouc selon la revendication 1, dans lequel les trous d'évent d'aération (115) comprennent chacun des fentes (115) qui sont formées par un unique trou ou des fentes qui sont formées par une pluralité de trous qui sont agencés selon une formation de lignes en pointillés et dans lequel une forme des ouvertures de fente dans la surface de moulage (111a) est une forme dont l'extrémité qui débouche dans la surface de moulage (111a) se termine dans la surface de moulage (111a), ou une forme annulaire, ou une forme constituée par une combinaison de ces formes.

3. Moule (20) pour mouler un article en caoutchouc selon la revendication 1 ou la revendication 2, dans lequel les trous d'évent d'aération (115), selon une section en coupe transversale qui est perpendiculaire à une direction de profondeur du trou (115) qui réalise une pénétration depuis la surface de moulage (111a) jusqu'à la surface arrière (111b), présentent chacun une forme linéaire, incurvée, tortueuse, ou une quelconque combinaison de ces formes.

4. Moule (20) pour mouler un article en caoutchouc selon l'une quelconque des revendications 1 à 3, dans lequel les trous d'évent d'aération (115) s'étendent depuis la surface de moulage (111a) jusqu'à la surface arrière (111b) selon une forme linéaire, incurvée, tortueuse, ou une quelconque combinaison de ces formes.

5. Moule (20) pour mouler un article en caoutchouc selon l'une quelconque des revendications 1 à 4, dans lequel le moule (20) est un moule de pneumatique (20) pour un moule en sections qui est divisé selon plusieurs sections dans une direction circonférentielle du pneumatique et dans lequel le moule (20) comporte des rainures (120A à 120H) sur sa surface arrière (111b) qui s'étendent depuis une face de division (111c) au niveau d'une extrémité circonférentielle jusqu'à une face de division (111c) au niveau de l'autre extrémité circonférentielle, les trous d'évent d'aération (115) débouchant à l'intérieur de ces rainures (120A à 120H).

6. Moule (20) pour mouler un article en caoutchouc selon la revendication 5, dans lequel des trous d'évent d'aération (115) sont prévus au niveau de positions autres que des parties de la surface de moulage (111a) pour mouler des sections évidées dans un caoutchouc non durci.

7. Moule (20) pour mouler un article en caoutchouc selon l'une quelconque des revendications 1 à 6, dans lequel le moule (20) pour mouler un article en caoutchouc est fabriqué au moyen d'un processus de prototypage rapide.

8. Procédé pour fabriquer un pneumatique, comprenant :
la formation du pneumatique en durcissant un pneumatique en caoutchouc non durci en utilisant le moule (20) pour mouler un article en caoutchouc selon l'une quelconque des revendications 1 à 7.

9. Pneumatique comportant :
une surface de pneumatique qui est moulée au moyen du moule (20) pour mouler un article en caoutchouc selon l'une quelconque des revendications 1 à 7, dans lequel des bavures qui sont formées par des trous d'évent d'aération (115) sont plus grandes que 0 mm et plus petites que 0,5 mm en largeur et sont plus grandes que 0 mm et plus petites que 7,5 mm en hauteur.

10. Pneumatique selon la revendication 9, dans lequel les bavures sont chacune plus petites que 0,09 mm en largeur et plus grandes que 0 mm et plus petites que 2,0 mm en hauteur.

11. Pneumatique selon la revendication 9 ou la revendication 10, dans lequel les bavures sont chacune plus petites que 0,06 mm en largeur et plus grandes que 0 mm et 0,5 mm ou plus petites en hauteur.

12. Pneumatique selon l'une quelconque des revendications 9 à 11, dans lequel chaque bavure a sa hauteur qui varie dans une direction de longueur le long de la surface de pneumatique qui est moulée par un trou d'évent d'aération (115).

13. Pneumatique selon l'une quelconque des revendications 9 à 12, dans lequel chaque bavure est formée par intermittence dans une direction de longueur le long de la surface de pneumatique qui est moulée par un trou d'évent d'aération (115).
